# EUROPEAN PATENT APPLICATION

(11) **EP 4 546 090 A1**
(43) Date of publication of application: **30.04.2025**
(21) Application number: 23850228.0
(22) Date of filing: 07.06.2023
(51) Int. Cl.: G06F 3/01, G06F 3/00, G06F 3/04842, G06F 3/16, H04W 4/80, G06V 40/20, G06F 1/16, G06N 3/02, G02B 27/01

(54) **ELECTRONIC DEVICE FOR SELECTING AT LEAST ONE EXTERNAL ELECTRONIC DEVICE ON BASIS OF AT LEAST ONE EXTERNAL OBJECT, AND METHOD THEREFOR**

(30) Priority: 02.08.2022 KR 20220095943; 07.09.2022 KR 20220113806
(71) Applicant: Samsung Electronics Co., Ltd., Suwon-si, Gyeonggi-do 16677 (KR)
(72) Inventor: WOO, Hyuntaek, Suwon-si, Gyeonggi-do 16677 (KR); KIM, Sungoh, Suwon-si, Gyeonggi-do 16677 (KR); YEO, Hyungsok, Suwon-si, Gyeonggi-do 16677 (KR); YEOM, Donghyun, Suwon-si, Gyeonggi-do 16677 (KR); OH, Youngjoon, Suwon-si, Gyeonggi-do 16677 (KR); LEE, Dasom, Suwon-si, Gyeonggi-do 16677 (KR); LEE, Sanghun, Suwon-si, Gyeonggi-do 16677 (KR); LEE, Jungjik, Suwon-si, Gyeonggi-do 16677 (KR); JEONG, Junsik, Suwon-si, Gyeonggi-do 16677 (KR)
(74) Representative: Walaski, Jan Filip
(86) International application number: PCT/KR2023/007762
(87) International publication number: WO 2024/029718

(57) **Abstract**

A processor of a wearable device, according to an embodiment, may be configured to display, in a display, visual objects which are identified using a communication circuit and correspond to multiple external electronic devices, respectively. The processor may be configured to, in a state where the visual objects are displayed, identify at least one external object including at least one hand by using a camera. The processor may be configured to, on the basis of a direction of one side of the at least one hand, identify an input indicating that at least one visual object is selected from among the visual objects displayed in the display. The processor may be configured to, on the basis of identification of the input, transmit information related to the input and an audio signal received through a microphone to at least one external electronic device corresponding to the at least one visual object selected by the input.

## Description

### [Technical Field]

The following descriptions relate to an electronic device for selecting at least one external electronic device based on at least one external object and a method thereof.

### [Background Art]

In order to provide enhanced user experience, an electronic device that provide an augmented reality (AR) service that displays information generated by a computer in connection with an external object in a real-world, a virtual reality (VR) service to provide an immersive user experience for a virtual world and/or a mixed reality (MR) service is being developed. The electronic device may be a wearable device that may be worn by a user. For example, the electronic device may be AR glasses and/or a head-mounted device (HMD).

The above-described information may be provided as a related art for the purpose of helping to understand the present disclosure. No claim or determination is raised as to whether any of the above-described information can be applied as a prior art related to the present disclosure.

### [Disclosure]

### [Technical Solution]

According to an embodiment, a wearable device may comprise a display, communication circuitry, a microphone, a camera, and a processor. The processor may be configured to display, in the display, visual objects respectively corresponding to a plurality of external electronic devices which are identified by using the communication circuitry. The processor may be configured to identify, in a state that the visual objects are displayed, at least one external object including at least one hand by using the camera. The processor may be configured to identify, based on a direction of a surface of the at least one hand, an input indicating selection of at least one visual object among the visual objects displayed in the display. The processor may be configured to transmit, based on identification of the input, information associated with the input, and an audio signal received through the microphone, to at least one external electronic device corresponding to the at least one visual object selected by the input.

According to an embodiment, a method of the wearable device may comprise identifying at least one external electronic device that is connected through communication circuitry in the wearable device. The method may comprise identifying, based on a direction of a surface of a hand in a field-of-view (FoV) of a user wearing the wearable device, an input indicating selection of the at least one external electronic device. The method may comprise transmitting, based on identification of the input, information associated with the input, and an audio signal received through a microphone in the wearable device, to the at least one external electronic device through the communication circuitry.

According to an embodiment, a method of a wearable device may comprise displaying, in the display in the wearable device, visual objects respectively corresponding to a plurality of external electronic devices identified using communication circuitry in the wearable device. The method may comprise identifying, in a state that the visual objects are displayed, at least one external object including at least one hand using a camera in the wearable device. The method may comprise identifying, based on a direction of a surface of the at least one hand, an input indicating selection of at least one visual object among the visual objects displayed in the display. The method may comprise transmitting, based on identification of the input, information associated with the input, and an audio signal received through a microphone in the wearable device, to at least one external electronic device corresponding to the at least one visual object selected by the input.

According to an embodiment, a wearable device may comprise communication circuitry, a microphone, and a processor. The processor may be configured to identify at least one external electronic device that is connected through the communication circuitry and the wearable device. The processor may be configured to identify, based on a direction of a surface of a hand in a FoV of a user wearing the wearable device, an input indicating selection of the at least one external electronic device. The processor may be configured to transmit, based on identification of the input, information associated with the input, and an audio signal received through a microphone in the wearable device, to the at least one external electronic device through the communication circuitry.

### [Description of the Drawings]

FIG. 1 is a block diagram of an electronic device in a network environment according to various embodiments.
FIG. 2 illustrates an example of a user interface (UI) provided by a wearable device according to an embodiment.
FIG. 3A illustrates an example of a prospective view of a wearable device according to an embodiment.
FIG. 3B illustrates an example of one or more hardware disposed in a wearable device according to an embodiment.
FIGS. 4A to 4B illustrate an example of an exterior of a wearable device according to an embodiment.
FIG. 5 illustrates an example of an operation in which a wearable device recognizes an external object according to an embodiment.
FIGS. 6A to 6B illustrate an example of an operation in which a wearable device selects at least one of a plurality of external electronic devices based on at least one of a location and a direction of an external object according to an embodiment.
FIGS. 7A to 7B illustrate an example of an operation in which a wearable device selects at least one of a plurality of external electronic devices based on external objects according to an embodiment.
FIGS. 8A to 8B illustrate an example of an operation in which a wearable device selects at least one of a plurality of external electronic devices based on external objects according to an embodiment.
FIG. 9 illustrates an example of an operation of controlling a wearable device to transmit an audio signal to at least one external electronic device based on an external object, according to an embodiment.
FIGS. 10A to 10B illustrate an example of an operation in which a wearable device outputs an audio signal received from at least one external electronic device according to an embodiment.
FIG. 11 illustrates an example of a flowchart of an operation of a wearable device according to an embodiment.
FIG. 12 illustrates an example of a flowchart of an operation of a wearable device according to an embodiment.
FIG. 13 illustrates an example of a flowchart of an operation of a wearable device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

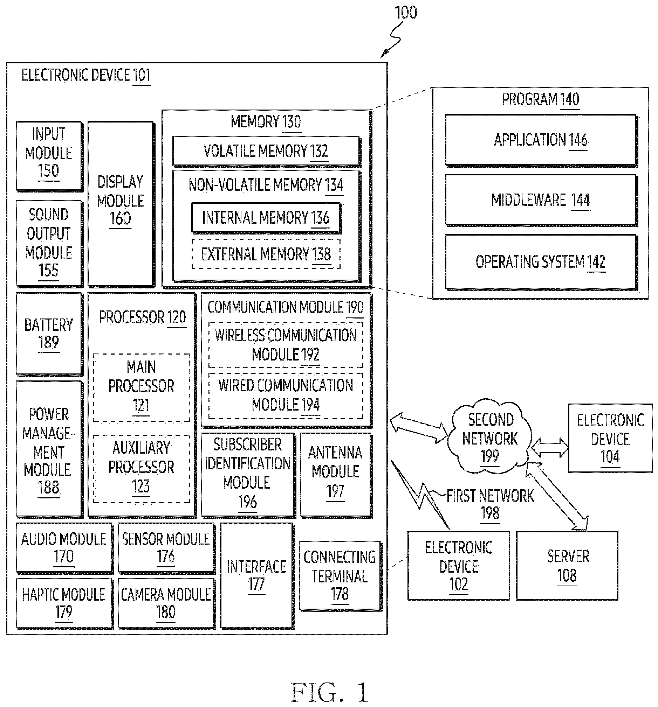

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

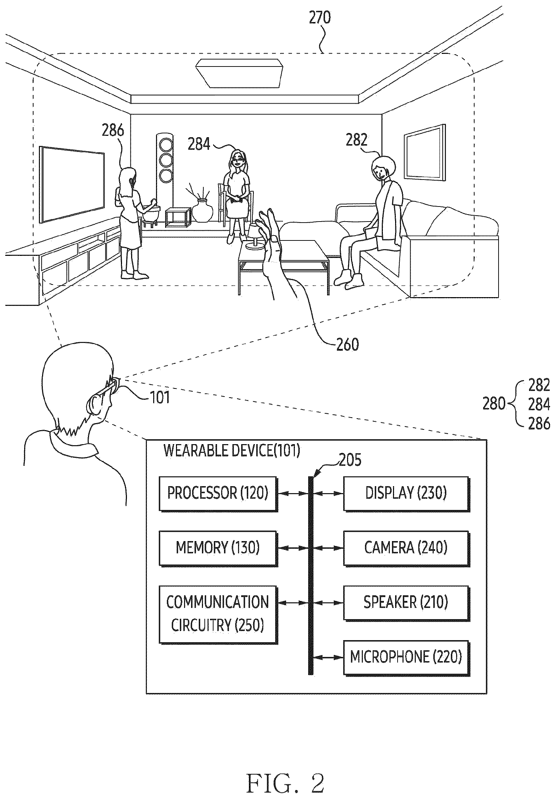

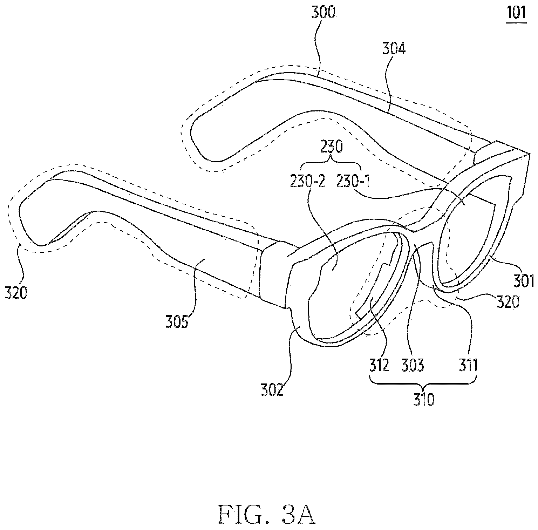

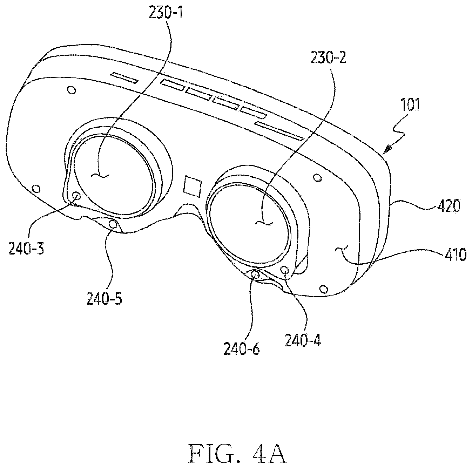

FIG. 2 illustrates an example of a user interface (UI) provided by a wearable device 101 according to an embodiment. According to an embodiment, the wearable device 101 may have a shape of glasses that may be wearable on a body part (e.g., a head) of a user. The wearable device 101 of FIG. 2 may be an example of the electronic device 101 of FIG. 1. The wearable device 101 may include a head-mounted display (HMD). For example, a housing of the wearable device 101 may include flexible material, such as rubber and/or silicone, having a shape of being in close contact with a part (e.g., a part of a face surrounding both eyes) of a head of the user. For example, the housing of the wearable device 101 may include one or more straps that are able to be twined around the head of the user and/or one or more temples attachable to an ear of the head. A shape of the wearable device 101 according to an embodiment may be described with reference to FIGS. 3A to 3B and/or FIGS. 4A to 4B.

FIG. 2 illustrates an example of a block diagram of the wearable device 101 according to an embodiment. Referring to FIG. 2, the wearable device 101 according to an embodiment may include at least one of a processor 120, a memory 130, a speaker 210, a microphone 220, a display 230, a camera 240, or communication circuitry 250. The processor 120, the memory 130, the speaker 210, the microphone 220, the display 230, the camera 240, and the communication circuitry 250 may be electrically and/or operably coupled with each other by an electronical component such as a communication bus 205. Hardware being operably coupled may mean that a direct connection, or an indirect connection between the hardware is established by wire or wireless so that a specific hardware of the hardware is controlled by other hardware, and/or the other hardware is controlled by the specific hardware. A type and/or the number of hardware included in the wearable device 101 is not limited to an example of FIG. 2.

According to an embodiment, the processor 120 of the wearable device 101 may include a hardware component for processing data based on one or more instructions. For example, the hardware component for processing data may include an arithmetical and logic unit (ALU), a floating point unit (FPU), a field programmable gate array (FPGA), and/or a central processing unit (CPU). The number of processors 120 may be one or more. For example, the processor 120 may have a structure of a multi-core processor such as a dual core, a quad core, or a hexa core. The processor 120 of FIG. 2 may include the processor 120 of FIG. 1.

According to an embodiment, the memory 130 of the wearable device 101 may include the hardware component for storing data and/or an instruction inputted to and/or outputted from the processor 120. The memory 130 may include, for example, a volatile memory such as a random-access memory (RAM), and/or a non-volatile memory such as a read-only memory (ROM). For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), a flash memory, a hard disk, a compact disk, and an embedded multi media card (eMMC). The memory 130 of FIG. 2 may include the memory 130 of FIG. 1.

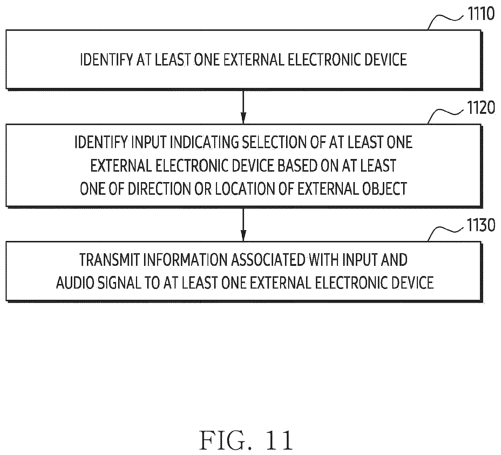

In the memory 130, one or more instructions indicating a calculation and/or an operation to be performed by the processor 120 on data may be stored. A set of one or more instructions may be referred to as a firmware, an operating system, a process, a routine, a sub-routine and/or an application. For example, the wearable device 101 and/or the processor 120 may perform at least one of operations of FIGS. 11 to 13 when a set of a plurality of instructions distributed in a form of the operating system, the firmware, a driver, and/or the application are executed. Hereinafter, the application being installed in the wearable device 101 may mean that the one or more instructions provided in the form of the application are stored in the memory 130 of the wearable device 101, and the one or more applications are stored in an executable format (e.g., a file with a preset extension by an operating system of the wearable device 101) by the processor 120 of the wearable device 101.

The speaker 210 of the wearable device 101 according to an embodiment may output an audio signal. The number of speakers 210 included in the wearable device 101 may be one or more. The speaker 210 may be controlled by the processor 120 of the wearable device 101. In a state controlled by the processor 120, the speaker 210 may output the audio signal stored in the wearable device 101 or transmitted to the wearable device 101. For example, the processor 120 may identify compressed data from the audio signal based on an audio codec such as MPEG-1 Audio Layer-3 (mp3). The processor 120 may generate an electrical signal for outputting sound by the speaker 210 from the data.

The microphone 220 of the wearable device 101 according to an embodiment may output the electrical signal indicating a vibration of an atmosphere. The number of microphones 220 included in the wearable device 101 may be one or more. The electrical signal outputted from the microphone 220 may be transmitted to the processor 120. The processor 120 may obtain, from the electrical signal, an audio signal for reconstructing the vibration using the speaker 210.

According to an embodiment, the display 230 of the wearable device 101 may output visualized information (e.g., at least one of screens of FIG. 2, FIG. 6A, FIG. 7A, FIG. 8A, FIG. 9 and/or FIG. 10A to FIG. 10B) to a user. The number of displays 230 included in the wearable device 101 may be one or more. For example, the display 230 may output visualized information to the user, by being controlled by the processor 120 and/or a graphic processing unit (GPU). The display 230 may include a flat panel display (FPD) and/or electronic paper. The FPD may include a liquid crystal display (LCD), a plasma display panel (PDP), a digital mirror device (DMD), one or more light emitting diodes and/or a micro LED. The LED may include an organic LED (OLED). In an embodiment in which the display 230 includes the LCD, the display 230 may further include a light source (e.g., a backlight) for emitting light toward the LCD. The light source may be omitted in an embodiment in which the display 230 includes an OLED.

Penetration of light may occur in at least a portion of the display 230 of the wearable device 101 according to an embodiment. The wearable device 101 may provide a user experience associated with augmented reality by providing a coupling of light outputted through the display 230 and light penetrating through the display 230 to the user. An example of a structure of the wearable device 101 for providing the user experience associated with the augmented reality will be described with reference to FIGS. 3A to 3B. In an embodiment, the wearable device 101 may have a structure in which the display 230 overlaps entire field-of-view (FoV) of the user in a state of being worn on a body part of the user such as a head. The display 230 may block ambient light of the wearable device 101 from being transmitted to the eyes of the user in the state. For example, the wearable device 101 may provide the user experience associated with virtual reality to the user using the display 230. An example of a structure of the wearable device 101 for providing the user experience associated with the virtual reality will be described with reference to FIGS. 4A to 4B.

According to an embodiment, the camera 240 of the wearable device 101 may include one or more optical sensors (e.g., a charged coupled device (CCD) sensor and a complementary metal oxide semiconductor (CMOS) sensor) that generate an electrical signal indicating a color and/or brightness of light. A plurality of optical sensors included in the camera 240 may be disposed in a form of a 2 dimensional array. The camera 240 may generate an image corresponding to light reaching the optical sensors of the 2 dimensional array and including a plurality of pixels disposed in 2 dimensions, by obtaining an electrical signal of each of the plurality of optical sensors substantially simultaneously. For example, photo data captured using the camera 240 may mean an image obtained from the camera 240. For example, video data captured using camera 240 may mean a sequence of a plurality of images obtained from the camera 240 along a preset frame rate. The wearable device 101 according to an embodiment may further include a flash light, disposed toward a direction in which the camera 240 receives light, for outputting light in the direction. The number of cameras 240 included in the wearable device 101 may be one or more.

In an embodiment, the FoV of the camera 240, which is an area formed based on a view angle in which a lens of the camera 240 is capable of receiving light, may correspond to an area corresponding to the image generated by the camera 240. Hereinafter, a subject and/or an external object refers to an object included in the FoV of the camera 240 and distinguished from the wearable device 101. In an embodiment, the FoV of the camera 240, such as the FoV 270 of FIG. 2, may at least partially match an environment shown to the user through the display 230.

The communication circuitry 250 of the wearable device 101 according to an embodiment may include hardware for supporting transmission and/or reception of an electrical signal between the wearable device 101 and an external electronic device. The communication circuitry 250 may include at least one of, for example, a MODEM, an antenna, and an optic/electronic (O/E) converter. The communication circuitry 250 may support transmission and/or reception of an electrical signal based on various types of protocols such as ethernet, a local area network (LAN), a wide area network (WAN), wireless fidelity (WiFi), Bluetooth, Bluetooth low energy (BLE), ZigBee, long term evolution (LTE), and a 5G new radio (NR).

Although not illustrated, the wearable device 101 may include another output means for outputting information in a form other than a visual form and an audible form. For example, the wearable device 101 may include a motor for providing haptic feedback based on a vibration. On the other hand, although illustrated based on different blocks, an embodiment is not limited thereto, and a portion (e.g., at least a portion of the processor 120, the memory 130, and the communication circuitry 250) of the hardware components illustrated in FIG. 2 may be included in a single integrated circuit such as a system on a chip (SoC).

As described above, the wearable device 101 according to an embodiment may include one or more hardware for providing the user experience based on the augmented reality (AR), the mixed reality (MR), and/or the virtual reality (VR). Referring to FIG. 2, an example of a field-of-view (FoV) 270 shown to the user through the display 230 of the wearable device 101 is illustrated. In an embodiment of the wearable device 101 including the display 230 configured to penetrate light incident on a first surface to a second surface opposite to the first surface, the FoV 270 may be formed by the light transmitted to both eyes of the user through the display 230. The wearable device 101 may provide the user experience based on the augmented reality by adding a virtual object overlapped on the FoV 270 using the display 230 together with a tangible object in the FoV 270. An embodiment is not limited thereto. For example, the FoV 270 may be formed by light emitted from the display 230 independently of ambient light of the wearable device 101. The wearable device 101 may provide a user with an immersive user experience associated with the virtual reality by changing a screen displayed in the FoV 270 based on a motion of the user wearing the wearable device 101.

The wearable device 101 according to an embodiment may overcome a limitation due to a distance between the wearable device 101 and an external electronic device, by communicating with the external electronic device using the communication circuitry 250. For example, the wearable device 101 may be connected to the external electronic device using a network service associated with a video conference. In the example, independent of the distance between the wearable device 101 and the external electronic device, the wearable device 101 may support an exchange of message (e.g., an audio signal including a Speech of a user) between the user wearing the wearable device 101 and another user of the external electronic device. In an embodiment, based on the video conference, the number of the external electronic device connected to the wearable device 101 may be one or more.

Referring to FIG. 2, an example of a screen associated with a video conference is illustrated, in which the wearable device 101 according to an embodiment displays in the FoV 270 of the user using the display 230. The wearable device 101 may be connected to one or more external electronic devices through the network service associated with the video conference. The wearable device 101 being connected to the one or more external electronic devices may mean that a session for exchanging data including the remark of the user is established between the wearable device 101 and the one or more external electronic devices. According to an embodiment, the wearable device 101 may display one or more external electronic devices connected to the wearable device 101 and/or a visual object 280 representing one or more users for the one or more external electronic devices in the FoV 270 using the display 230. For example, the wearable device 101 may display visual objects respectively corresponding to a plurality of external electronic devices which are identified by using the communication circuitry 250 in the display 230. Referring to FIG. 2, an example in which the wearable device 101 displays three visual objects 282, 284, and 286 representing three external electronic devices in the FoV 270 is illustrated, in an exemplary state in which the wearable device 101 is connected to the three external electronic devices through the session.

According to an embodiment, the wearable device 101 may support an interaction between an external electronic device (e.g., the external electronic device connected to the wearable device 101 through the session associated with the video conference) and the user wearing the wearable device 101 by using the visual object 280. For example, the visual object 280 may represent an external electronic device connected to the wearable device 101 through a network, and/or a user of the external electronic device. For example, in order to represent the external electronic device connected through a network service such as the video conference and/or the user of the external electronic device, the wearable device 101 may display the visual objects 282, 284, and 286 such as an avatar representing the external electronic device and/or the user of the external electronic device in the FoV 270.

According to an embodiment, an exterior of each of the visual objects 282, 284, and 286 displayed by the wearable device 101 may be set by corresponding account information. A motion of each of the visual objects 282, 284, and 286 may be adjusted by information transmitted from external electronic devices of the visual objects 282, 284, and 286. For example, a motion of the visual object 282 may be adjusted by a motion of the user of the external electronic device, measured by an external electronic device corresponding to the visual object 282.

In an embodiment of FIG. 2 in which the wearable device 101 and the external electronic devices respectively corresponding to the visual objects 282, 284, and 286 are connected, similar to an operation in which the wearable device 101 displays the visual objects 282, 284, and 286, the external electronic devices may display a visual object (or an avatar) based on account information (e.g., account information of the user wearing the wearable device 101) corresponding to the wearable device 101. The visual object displayed by the external electronic device and associated with the wearable device 101 may be adjusted by information transmitted from the wearable device 101 to the external electronic device. For example, the wearable device 101 may identify a motion of the user wearing the wearable device 101. The motion identified by the wearable device 101 may be transmitted to the external electronic devices respectively corresponding to the visual objects 282, 284, and 286. The external electronic devices may change a display of the visual object associated with the wearable device 101 based on the motion identified by the wearable device 101.

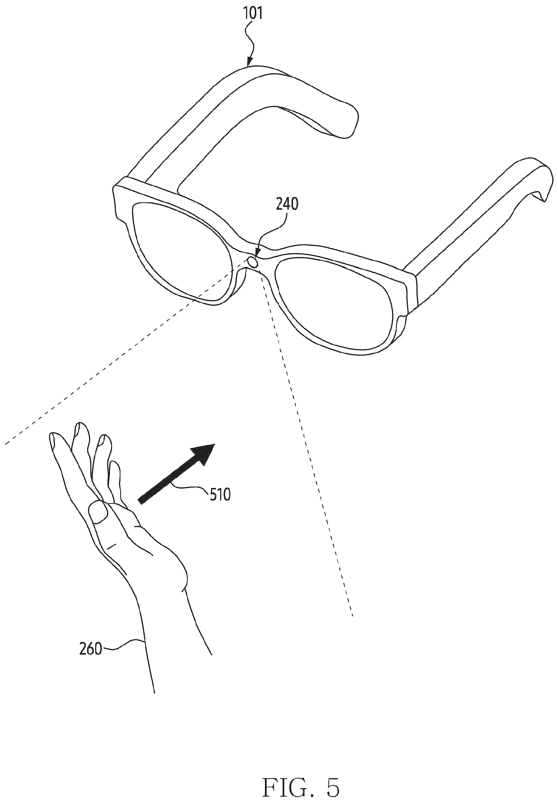

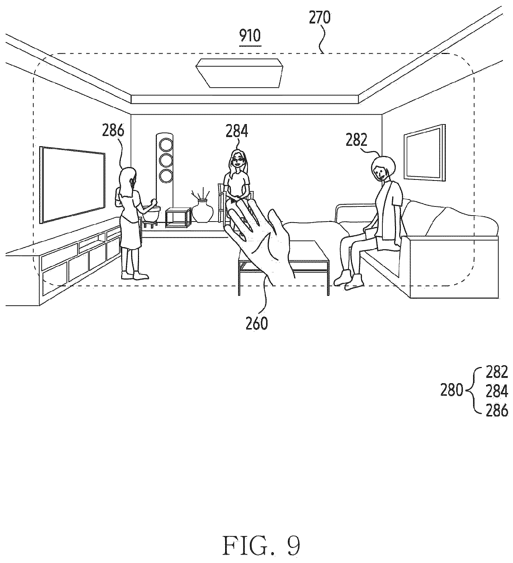

The wearable device 101 according to an embodiment may identify a motion of a user by using a sensor in the wearable device 101 including the camera 240. For example, the wearable device 101 may identify a motion of an external object 260 such as a hand, based on an image and/or a video identified from the camera 240. For example, the wearable device 101 may identify the external object 260 using the camera 240 in a state in which the visual object 280 is displayed. The number of the external objects 260 identified by the wearable device 101 may be one or more. The motion of the external object 260 identified by the wearable device 101 based on the camera 240 may be transmitted to an external electronic device through the communication circuitry 250. The external electronic device may change display of the visual object corresponding to the wearable device 101 based on the motion. An operation in which the wearable device 101 according to an embodiment identifies a motion (e.g., the motion of the external object 260) of the user wearing the wearable device 101 using the camera 240 is described with reference to FIG. 5. An operation of identifying an input indicating that the wearable device 101 ceases transmitting the motion of the user wearing the wearable device 101 to the external electronic device according to an embodiment will be described with reference to FIG. 9.

In an embodiment of FIG. 2 in which the wearable device 101 is connected to the plurality of external electronic devices based on the video conference, the wearable device 101 may visualize a gesture of a user corresponding to the visual object 280 using an avatar such as the visual object 280. For example, the wearable device 101 may support an exchange of a gesture between users (e.g., the user of wearable device 101 and the users of the visual objects 282, 284, and 286) connected through the video conference. Similar to the exchange of the gesture, the wearable device 101 according to an embodiment may support an exchange of an audio signal between the users (e.g., the user of the wearable device 101 and users of the visual objects 282, 284, and 286) connected through the video conference using the speaker 210 and the microphone 220.

The wearable device 101 according to an embodiment may obtain an audio signal to be transmitted to at least one external electronic device connected to the wearable device 101 based on the video conference using the microphone 220. The audio signal obtained by the wearable device 101 using the microphone 220 may include a remark of the user wearing the wearable device 101. The wearable device 101 may be established based on the communication circuitry 250 and may transmit the audio signal through a session associated with the video conference. Transmitting of the audio signal by the wearable device 101 may be performed based on a communication method for streaming, such as a media container. In an embodiment of FIG. 2, the wearable device 101 may transmit a bitstream of the audio signal to the external electronic devices corresponding to visual objects 282, 284, and 286 with information (e.g., metadata) associated with the audio signal.

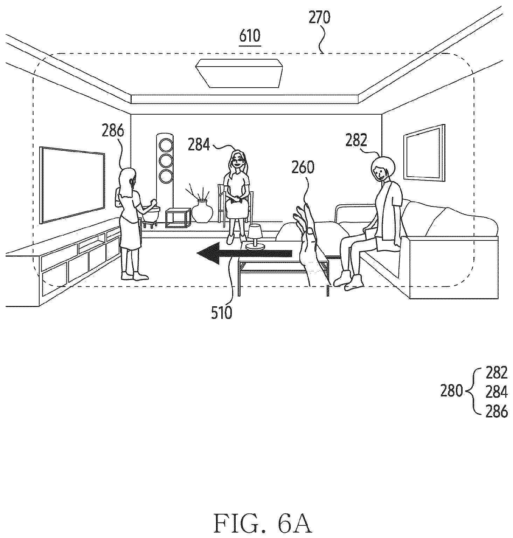

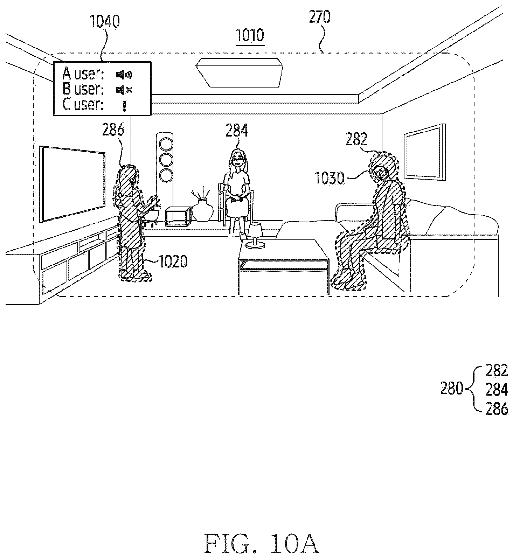

In a state in which the wearable device 101 is connected to the plurality of external electronic devices through the network service such as the video conference, the audio signal identified through the microphone 220 and a motion identified using the camera 240 (e.g., a gesture associated with the external object 260) may be shared throughout the wearable device 101 and the plurality of external electronic devices. The wearable device 101 according to an embodiment may support a function of selectively transmitting information on at least one of the audio signal or the motion to at least one of the plurality of external electronic devices based on the motion. For example, in an embodiment of FIG. 2 in which three external electronic devices corresponding to the visual objects 282, 284, and 286 are connected to the wearable device 101, the wearable device 101 may exclusively transmit the audio signal received through the microphone 220 to at least one of the three external electronic devices based on a specific gesture of the external object 260. The specific gesture may include a gesture conventionally performed for a whisper, such as a gesture in which an open palm approaches lips. An operation in which the wearable device 101 selectively transmits an audio signal to at least one of a plurality of external electronic devices based on the specific gesture according to an embodiment will be described with reference to FIG. 6A to FIG. 6B, FIG. 7A to FIG. 7B, and/or FIG. 8A to FIG. 8B. An example of the user interface (UI) that the wearable device 101 displays to a user based on an audio signal received from an external electronic device will be described with reference to FIGS. 10A to 10B.

As described above, the wearable device 101 according to an embodiment may selectively transmit the audio signal received through the microphone 220 to the at least one of the plurality of external electronic devices connected to the wearable device 101 based on a gesture of the external object 260 including a hand of the user. The gesture may include a motion displayed in the FoV 270 and disposing the external object 260 between the visual objects 282, 284, and 286 for the plurality of external electronic devices. For example, the wearable device 101 may identify an input indicating selection of at least one visual object among the visual objects 282, 284, and 286 based on a location or a direction of the external object 260 in the FoV 270. Based on the input, the wearable device 101 may transmit the audio signal obtained through the microphone 220 to at least one external electronic device corresponding to the at least one visual object (e.g., the at least one visual object selected by the input).

Since the wearable device 101 according to an embodiment supports selective transmission of the audio signal based on a gesture of the external object 260 such as the hand of user, the wearable device 101 may provide an intuitive user experience associated with transmission of the audio signal to the user. Independent of establishing an additional session between a specific external electronic device among the plurality of external electronic devices and the wearable device 101 in a state in which the wearable device 101 establishes a session for the video conference with the plurality of external electronic devices, the wearable device 101 may support exclusively transmitting an audio signal to the specific external electronic device based on the gesture. Since the additional session is not established, a resource of the wearable device 101, the plurality of external electronic devices, and a server for the video conference may be utilized more efficiently.

Hereinafter, an operation of the wearable device 101 based on the external object 260 such as the hand of the user will be described, but an embodiment is not limited thereto. For example, the external object 260 may include a pointing device connected to the wearable device 101. The external object 260 may include an object that may be held by the hand of the user.

Hereinafter, an example of a form factor of the wearable device 101 according to an embodiment will be described with reference to FIG. 3A to FIG. 3B and/or FIG. 4A to FIG. 4B.

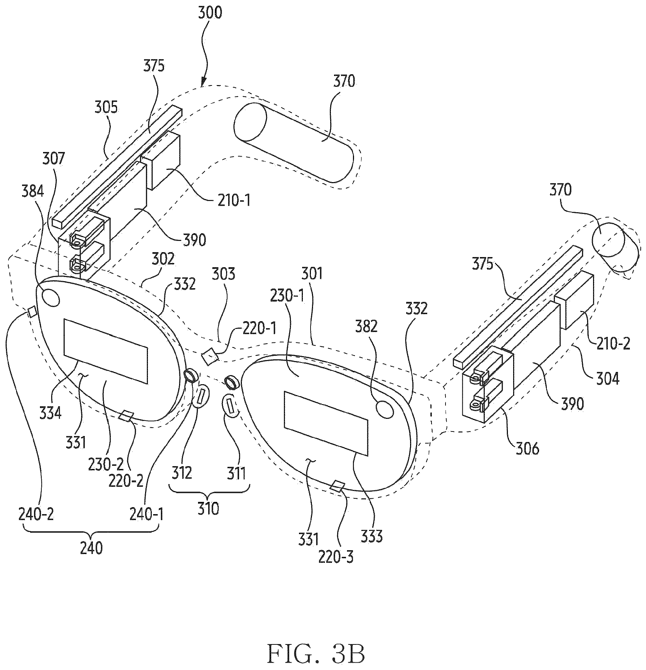

FIG. 3A illustrates an example of a prospective view of a wearable device 101 according to an embodiment. FIG. 3B illustrates an example of one or more hardware disposed in the wearable device 101 according to an embodiment. The wearable device 101 of FIGS. 3A to 3B may be an example of the wearable device 101 of FIGS. 1 and 2. Referring to FIG. 3A, according to an embodiment, the wearable device 101 may include at least one display 230 and a frame 300 supporting the at least one display 230. The at least one display 230 may be an example of the display 230 of FIG. 2.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 382 and 384 of FIG. 3B on at least one display 230, in response to a user's preset gesture obtained through a motion recognition camera 240-2 of FIG. 3B.

According to an embodiment, the at least one display 230 may provide visual information to a user. For example, the at least one display 230 may include a transparent or translucent lens. The at least one display 230 may include a first display 230-1 and/or a second display 230-2 spaced apart from the first display 230-1. For example, the first display 230-1 and the second display 230-2 may be disposed at positions corresponding to the user's left and right eyes, respectively.

Referring to FIG. 3B, the at least one display 230 may provide visual information transmitted through a lens included in at least one display 230 from ambient light to a user and other visual information distinguished from the visual information3. The lens may be formed based on at least one of a fresnel lens, a pancake lens, or a multi-channel lens. For example, the at least one display 230 may include a first surface 331 and a second surface 332 opposite to the first surface 331. A display area may be formed on the second surface 332 of at least one display 230. When the user wears the wearable device 101, ambient light may be transmitted to the user by being incident on the first surface 331 and being penetrated through the second surface 332. For another example, the at least one display 230 may display an augmented reality image in which a virtual reality image provided by the at least one optical device 382 and 384 is combined with a reality screen transmitted through ambient light, on a display area formed on the second surface 332.

According to an embodiment, the at least one display 230 may include at least one waveguide 333 and 334 that transmits light transmitted from the at least one optical device 382 and 384 by diffracting to the user. The at least one waveguide 333 and 334 may be formed based on at least one of glass, plastic, or polymer. A nano pattern may be formed on at least a portion of the outside or inside of the at least one waveguide 333 and 334. The nano pattern may be formed based on a grating structure having a polygonal or curved shape. Light incident to an end of the at least one waveguide 333 and 334 may be propagated to another end of the at least one waveguide 333 and 334 by the nano pattern. The at least one waveguide 333 and 334 may include at least one of at least one diffraction element (e.g., a diffractive optical element (DOE), a holographic optical element (HOE)), and a reflection element (e.g., a reflection mirror). For example, the at least one waveguide 333 and 334 may be disposed in the wearable device 101 to guide a screen displayed by the at least one display 230 to the user's eyes. For example, the screen may be transmitted to the user's eyes based on total internal reflection (TIR) generated in the at least one waveguide 333 and 334.

The wearable device 101 may analyze an object included in a real image collected through a photographing camera (not shown) (e.g., the camera 240 of FIG. 2), combine with a virtual object (e.g., the virtual object of FIG. 2) corresponding to an object that become a subject of augmented reality provision among the analyzed object, and display on the at least one display 230. The virtual object may include at least one of text and images for various information associated with the object included in the real image. The wearable device 101 may analyze the object based on a multi-camera such as a stereo camera. For the object analysis, the wearable device 101 may execute space recognition (e.g., simultaneous localization and mapping (SLAM) using the multi-camera and/or time-of-flight (ToF). The user wearing the wearable device 101 may watch an image displayed on the at least one display 230.

According to an embodiment, a frame 300 may be configured with a physical structure in which the wearable device 101 may be worn on the user's body. According to an embodiment, the frame 300 may be configured so that when the user wears the wearable device 101, the first display 230-1 and the second display 230-2 may be positioned corresponding to the user's left and right eyes. The frame 300 may support the at least one display 230. For example, the frame 300 may support the first display 230-1 and the second display 230-2 to be positioned at positions corresponding to the user's left and right eyes.

Referring to FIG. 3A, according to an embodiment, the frame 300 may include an area 320 at least partially in contact with the portion of the user's body in case that the user wears the wearable device 101. For example, the area 320 of the frame 300 in contact with the portion of the user's body may include an area in contact with a portion of the user's nose, a portion of the user's ear, and a portion of the side of the user's face that the wearable device 101 contacts. According to an embodiment, the frame 300 may include a nose pad 310 that is contacted on the portion of the user's body. When the wearable device 101 is worn by the user, the nose pad 310 may be contacted on the portion of the user's nose. The frame 300 may include a first temple 304 and a second temple 305 that is contacted on another portion of the user's body that is distinct from the portion of the user's body.

For example, the frame 300 may include a first rim 301 surrounding at least a portion of the first display 230-1, a second rim 302 surrounding at least a portion of the second display 230-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temple 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the wearable device 101 may identify an external object (e.g., a user's fingertip) touching the frame 300 and/or a gesture performed by the external object by using a touch sensor, a grip sensor, and/or a proximity sensor formed on at least a portion of the surface of the frame 300.

According to an embodiment, the wearable device 101 may include hardware (e.g., hardware described above based on the block diagram of FIG. 2) that performs various functions. For example, the hardware may include a battery module 370, an antenna module 375, the at least one optical device 382 and 384, a speaker 210, a microphone 220, a light emitting module (not illustrated), and/or a printed circuit board (PCB) 390. Various hardware may be disposed in the frame 300.

According to an embodiment, the microphone 220 of the wearable device 101 may obtain a sound signal, by being disposed on at least a portion of the frame 300. The first microphone 220-1 disposed on the bridge 303, the second microphone 220-2 disposed on the second rim 302, and the third microphone 220-3 disposed on the first rim 301 are illustrated in FIG. 3B, but the number and disposition of the microphone 220 are not limited to an embodiment of FIG. 3B. In case that the number of the microphone 220 included in the wearable device 101 is two or more, the wearable device 101 may identify a direction of the sound signal by using a plurality of microphones disposed on different portions of the frame 300.

According to an embodiment, the at least one optical device 382 and 384 may project a virtual object on the at least one display 230 in order to provide various image information to the user. For example, the at least one optical device 382 and 384 may be a projector. The at least one optical device 382 and 384 may be disposed adjacent to the at least one display 230 or may be included in the at least one display 230 as a portion of the at least one display 230. According to an embodiment, the wearable device 101 may include a first optical device 382 corresponding to the first display 230-1, and a second optical device 384 corresponding to the second display 230-2. For example, the at least one optical device 382 and 384 may include the first optical device 382 disposed at a periphery of the first display 230-1 and the second optical device 384 disposed at a periphery of the second display 230-2. The first optical device 382 may transmit light to the first waveguide 333 disposed on the first display 230-1, and the second optical device 384 may transmit light to the second waveguide 334 disposed on the second display 230-2.

In an embodiment, a camera 240 (e.g., the camera 240 of FIG. 2) may include the photographing camera, an eye tracking camera (ET CAM) 240-1, and/or the motion recognition camera 240-2. The photographing, the eye tracking camera 240-1, and the motion recognition camera 240-2 may be disposed at different positions on the frame 300 and may perform different functions. The eye tracking camera 240-1 may output data indicating the gaze of the user wearing the wearable device 101. For example, the wearable device 101 may detect the gaze from an image including the user's pupil obtained through the eye tracking camera 240-1. An example in which the eye tracking camera 240-1 is disposed toward the user's right eye is illustrated in FIG. 3B, but the embodiment is not limited thereto, and the eye tracking camera 240-1 may be disposed alone toward the user's left eye or may be disposed toward two eyes.

In an embodiment, the photographing camera may photograph a real image or background to be matched with a virtual image in order to implement the augmented reality or mixed reality content. The photographing camera may photograph an image of a specific object existing at a position viewed by the user and may provide the image to the at least one display 230. The at least one display 230 may display one image in which a virtual image provided through at least one optical device 382 and 384 is overlapped with information on the real image or background including the image of the specific obj ect obtained by using the photographing camera. In an embodiment, the photographing camera may be disposed on the bridge 303 disposed between the first rim 301 and the second rim 302.

In an embodiment, the eye tracking camera 240-1 may implement a more realistic augmented reality by matching the user's gaze with the visual information provided on the at least one display 230, by tracking the gaze of the user wearing the wearable device 101. For example, when the user looks at the front, the wearable device 101 may naturally display environment information associated with the user's front on the at least one display 230 at a position where the user is positioned. The eye tracking camera 240-1 may be configured to capture an image of the user's pupil in order to determine the user's gaze. For example, the eye tracking camera 240-1 may receive gaze detection light reflected from the user's pupil and may track the user's gaze based on the position and movement of the received gaze detection light. In an embodiment, the eye tracking camera 240-1 may be disposed at a position corresponding to the user's left and right eyes. For example, the eye tracking camera 240-1 may be disposed in the first rim 301 and/or the second rim 302 to face the direction in which the user wearing the wearable device 101 is positioned.

The motion recognition camera 240-2 may provide a specific event to the screen provided on the at least one display 230 by recognizing the movement of the whole or portion of the user's body, such as the user's torso, hand, or face. The motion recognition camera 240-2 may obtain a signal corresponding to motion by recognizing the user's gesture, and may provide a display corresponding to the signal to the at least one display 230. A processor may identify a signal corresponding to the operation and may perform a preset function based on the identification. In an embodiment, the motion recognition camera 240-2 may be disposed on the first rim 301 and/or the second rim 302.

The camera 240 included in the wearable device 101 is not limited to the above-described eye tracking camera 240-1 and the motion recognition camera 240-2. For example, the wearable device 101 may identify an external object (e.g., the external object 280 of FIG. 2) included in a FoV (e.g., the FoV 270 of FIG. 2) by using the camera 240 disposed toward the user's FoV. That the wearable device 101 identifies the external object may be performed based on a sensor for identifying a distance between the wearable device 101 and the external object, such as a depth sensor and/or a time of flight (ToF) sensor. The camera 240 disposed toward the FoV may support an autofocus function and/or an optical image stabilization (OIS) function. For example, in order to obtain an image including a face of the user wearing the wearable device 101, the wearable device 101 may include the camera 240 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 240. The light source may include an LED having an infrared wavelength. The light source may be disposed on at least one of the frame 300, and the hinge units 306 and 307.

According to an embodiment, the battery module 370 may supply power to electronic components of the wearable device 101. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

In an embodiment, the antenna module 375 may transmit the signal or power to the outside of the wearable device 101 or may receive the signal or power from the outside. The antenna module 375 may be electrically and/or operably connected to the communication circuit 250 of FIG. 2. In an embodiment, the antenna module 375 may be disposed in the first temple 304 and/or the second temple 305. For example, the antenna module 375 may be disposed close to one surface of the first temple 304 and/or the second temple 305.

In an embodiment, the speaker 210 may output a sound signal to the outside of the wearable device 101. A sound output module may be referred to as a speaker. In an embodiment, the speaker 210 may be disposed in the first temple 304 and/or the second temple 305 in order to be disposed adjacent to the ear of the user wearing the wearable device 101. For example, the speaker 210 may include a second speaker 210-2 disposed adjacent to the user's left ear by being disposed in the first temple 304, and a first speaker 210-1 disposed adjacent to the user's right ear by being disposed in the second temple 305.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may emit red light at a constant cycle. In an embodiment, the light emitting module may be disposed on the first rim 301 and/or the second rim 302.

Referring to FIG. 3B, according to an embodiment, the wearable device 101 may include the printed circuit board (PCB) 390. The PCB 390 may be included in at least one of the first temple 304 or the second temple 305. The PCB 390 may include an interposer disposed between at least two sub PCBs. On the PCB 390, one or more hardware (e.g., hardware illustrated by the blocks described above with reference to FIG. 2) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify the user's motion and/or gesture performed to execute or stop a specific function of the wearable device 101 based on the IMU.

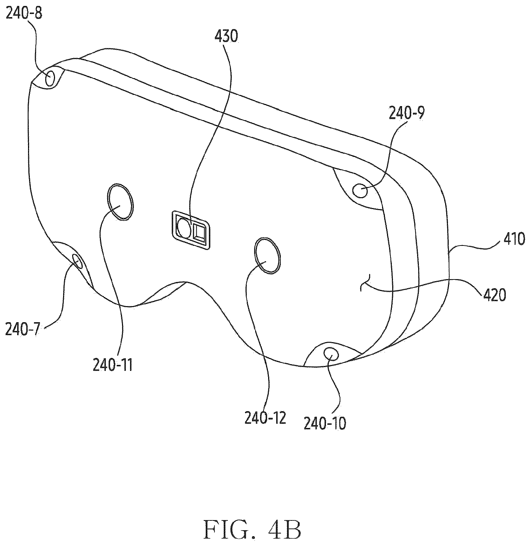

FIGS. 4A to 4B illustrate an example of an exterior of a wearable device according to an embodiment. The wearable device 101 of FIGS. 4A to 4B may be an example of the wearable device 101 of FIG. 2. According to an embodiment, an example of an exterior of a first surface 410 of a housing of the wearable device 101 may be illustrated in FIG. 4A, and an example of an exterior of a second surface 420 opposite to the first surface 410 may be illustrated in FIG. 4B.

Referring to FIG. 4A, according to an embodiment, the first surface 410 of the wearable device 101 may have an attachable shape on the user's body part (e.g., the user's face). Although not illustrated, the wearable device 101 may further include a strap for being fixed on the user's body part, and/or one or more temples (e.g., the first temple 304 and/or the second temple 305 of FIGS. 3A to 3B). A first display 230-1 for outputting an image to the left eye among the user's two eyes and a second display 230-2 for outputting an image to the right eye among the user's two eyes may be disposed on the first surface 410. The wearable device 101 may further include rubber or silicon packing, which are formed on the first surface 410, for preventing interference by light (e.g., ambient light) different from the light emitted from the first display 230-1 and the second display 230-2.

According to an embodiment, the wearable device 101 may include cameras 240-3 and 240-4 for photographing and/or tracking two eyes of the user adjacent to each of the first display 230-1 and the second display 230-2. The cameras 240-3 and 240-4 may be referred to as an ET camera. According to an embodiment, the wearable device 101 may include cameras 240-5 and 240-6 for photographing and/or recognizing the user's face. The cameras 240-5 and 240-6 may be referred to as a FT camera.

Referring to FIG. 4B, a camera (e.g., cameras 240-7, 240-8, 240-9, 240-10, 240-11, and 240-12), and/or a sensor (e.g., the depth sensor 430) for obtaining information associated with the external environment of the wearable device 101 may be disposed on the second surface 420 opposite to the first surface 410 of FIG. 4A. For example, the cameras 240-7, 240-8, 240-9, and 240-10 may be disposed on the second surface 420 in order to recognize an external object (e.g., the external object 280 of FIG.2) distinct from the wearable device 101. For example, by using cameras 240-11 and 240-12, the wearable device 101 may obtain an image and/or video to be transmitted to each of the user's two eyes. The camera 240-11 may be disposed on the second surface 420 of the wearable device 101 to obtain an image to be displayed through the second display 230-2 corresponding to the right eye among the two eyes. The camera 240-12 may be disposed on the second surface 420 of the wearable device 101 to obtain an image to be displayed through the first display 230-1 corresponding to the left eye among the two eyes.

According to an embodiment, the wearable device 101 may include the depth sensor 430 disposed on the second surface 420 in order to identify a distance between the wearable device 101 and the external object. By using the depth sensor 430, the wearable device 101 may obtain spatial information (e.g., a depth map) about at least a portion of the FoV (e.g., the FoV of FIG. 2) of the user wearing the wearable device 101.

Although not illustrated, a microphone (e.g., the microphone 220 of FIG. 2) for obtaining sound outputted from the external object may be disposed on the second surface 420 of the wearable device 101. The number of microphones may be one or more according to embodiments.

As described above, according to an embodiment, the wearable device 101 may have a form factor for being worn on a head of a user. The wearable device 101 may provide a user experience based on augmented reality, virtual reality, and/or mixed reality in a state of being worn on the head. The wearable device 101 may select at least one external electronic device to transmit an audio signal from among a plurality of external electronic devices based on a gesture of the user wearing the wearable device 101. The gesture may include a conventional gesture associated with a whisper. The selection of the at least one external electronic device by the wearable device 101 based on the gesture may be performed independently of a UI visually provided by the wearable device 101, such as selecting the at least one external electronic device from a list of the plurality of external electronic devices. For example, since the wearable device 101 does not display a UI for selecting the at least one external electronic device, occupation of resource for displaying the UI may be reduced.

Hereinafter, referring to FIG. 5, an operation in which a wearable device 101 identifies a gesture of a user according to an embodiment will be described.

FIG. 5 illustrates an example of an operation in which a wearable device 101 recognizes an external object 260 according to an embodiment. The wearable device 101 of FIG. 5 may be an example of the wearable device 101 of FIG. 2. For example, the wearable device 101 and the camera 240 of FIG. 2 may include the wearable device 101 and a camera 240 of FIG. 5.

According to an embodiment, the wearable device 101 may identify the wearable device 101 and/or the external object 260 adjacent to the user wearing the wearable device 101 by using the camera 240. The external object 260 may be referred to as an object, a subject, and/or a tangible object in terms of an object captured by the camera 240. For example, the camera 240 may be disposed in the wearable device 101 to capture at least a portion of a FoV of the user (e.g., FoV 270 of FIG. 2) wearing the wearable device 101, or to capture an external space including the FoV. For example, the camera 240 of the wearable device 101 may be disposed on a second surface opposite to a first surface of the wearable device 101 in which a display 230 is disposed. An optical axis of a camera included in the wearable device 101 may match a direction of the FoV of the user wearing the wearable device 101.

According to an embodiment, the wearable device 101 may recognize a subject (e.g., the external object 260) from an image and/or a video obtained from the camera 240. Recognizing the subject may include an operation of identifying a location of the subject in the image and/or the video. The operation of identifying the location of the subject may include an operation of obtaining data representing the location of the subject in the image and/or the video based on a bounding box. Recognizing the subject may include an operation of classifying the subject included in the image and/or the video. The operation of classifying the subject may include an operation of obtaining data matching at least one category including the subject among preset categories.

According to an embodiment, the wearable device 101 may process an image and/or a video by using a neural network trained to recognize a preset body part such as a hand. Since the wearable device 101 processes the image and/or the video using the neural network, the wearable device 101 may identify the external object 260 including the preset body part. The neural network may be associated with at least one of parameters for simulating a neural network of living things, hardware (e.g., a processor such as a neural processing unit (NPU), and/or a graphical processing unit (GPU)), and/or software, included in the wearable device 101 to support a function associated with artificial intelligence. The neural network may include the artificial intelligence model of FIG. 1. For example, the neural network may be trained to output data indicating a location and/or a direction of one or more joints included in the hand.

According to an embodiment, the wearable device 101 may identify a posture, a location, and/or a direction 510 of the external object 260 from an image obtained through the camera 240. In an embodiment in which the wearable device 101 uses the neural network trained to recognize the hand, the wearable device 101 may obtain data indicating the posture, the location, and/or the direction 510 of the external object 260 corresponding to the hand based on data outputted from the neural network. The posture of the external object 260 included in the data may indicate a shape of a body part (e.g., one or more fingers, and/or a palm) included in the hand. The location of the external object 260 included in the data may indicate the location of the external object 260 in the image and/or a distance between the user wearing the wearable device 101 and the external object 260. The direction 510 of the external object 260 included in the data may indicate a normal vector of a plane formed by the palm included in the hand. The gesture performed by a user may be performed by using both hands as well as a single hand. According to an embodiment, the wearable device 101 may recognize both hands included in an image and/or a video identified through the camera 240 substantially simultaneously.

According to an embodiment, the wearable device 101 may display a visual object based on a result of identifying the external object 260 in the display (e.g., the display 230 of FIG. 2) based on identifying the external object 260 from the image and/or the video obtained through the camera 240. The visual object may have a shape of the external object 260 identified from the image and/or the video. An example of the visual object displayed in the display based on the wearable device 101 identifying the external object 260 is described with reference to FIG. 6A, FIG. 7A, FIG. 8A, and/or FIG. 9.

The wearable device 101 according to an embodiment may identify an input indicating selection of at least one external electronic device among a plurality of external electronic devices in a state of being connected to the plurality of external electronic devices. The wearable device 101 may transmit an audio signal received through a microphone (e.g., the microphone 220 of FIG. 2) to the at least one external electronic device selected by the input. The wearable device 101 may transmit the audio signal together with information associated with the input to the at least one external electronic device.

In an embodiment, the input may be identified based on at least one of a location and a direction of the external object 260 in the FoV of the user wearing the wearable device 101. For example, the wearable device 101 may identify the input based on a gesture performed by the external object 260 in a preset location range. The preset location range may be associated with a distance between the wearable device 101 and the external object 260, or a distance between a head (or a specific body part in the head such as lips) of the user wearing the wearable device 101 and the external object 260. For example, in case that the distance between the wearable device 101 and the external object 260 is less than a preset distance, the wearable device 101 may identify an input indicating selection of the external electronic device to transmit the audio signal based on the direction 510 of the external object 260. For example, based on identifying the external object 260 approaching the lips of the user, the wearable device 101 may obtain data indicating the posture and/or the direction 510 of the external object 260.

Referring to FIG. 5, an exemplary state in which the wearable device 101 identifies the shape and/or the direction 510 of the external object 260 in a state of identifying the external object 260 less than the preset distance from the preset body part (e.g., the head, and/or the lips of the user) of the user wearing the wearable device 101 and/or the wearable device 101 is illustrated. According to an embodiment, the wearable device 101 may identify the shape of the external object 260 by using the neural network. The wearable device 101 may identify whether the shape of the external object 260 matches a preset shape. In an embodiment in which the wearable device 101 recognizes the hand of the user, the preset shape may be associated with an unfolded hand. For example, based on the number of finger joints included in a preset angular range (e.g., an angular range associated with unfolding of the j oint) including 180 °, the wearable device 101 may identify whether the shape of the external object 260 matches the preset shape. For example, based on at least one of angles between the palm and the fingers, the wearable device 101 may identify whether the shape of the external object 260 matches the preset shape. The wearable device 101 may identify the shape and/or the direction 510 of the external object 260 based on detecting a motion of the external object 260 ceased for a period exceeding a preset threshold (e.g., a threshold in seconds).

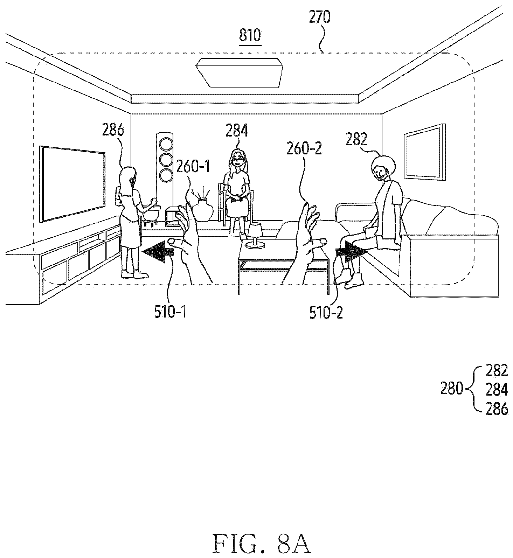

According to an embodiment, the wearable device 101 may identify the shape and/or the direction 510 of the external object 260 in response to identifying the external object 260 ceased for a period exceeding a preset threshold from the image and/or the video obtained from the camera 240. In case that the shape of the external object 260 has a preset shape for selectively transmitting the audio signal to the at least one external electronic device connected to the wearable device 101, the wearable device 101 may identify the at least one external electronic device based on the location, and/or the direction 510 of the external object 260. The preset shape that the wearable device 101 compares with the shape of the external object 260 is not limited to the example. For example, the wearable device 101 may compare a shape previously registered by the user with the shape of the external object 260. For example, the wearable device 101 may include the preset shape for applying a preset sound effect (e.g., echo, and/or yelling) to the shape of the external object 260. An operation performed by the wearable device 101 in a state of identifying the external object 260 having the preset shape for applying the preset sound effect will be described with reference to FIGS. 8A to 8B.

As described above, the wearable device 101 according to an embodiment may identify an input indicating selection of one or more external electronic devices to transmit the audio signal received through the microphone of the wearable device 101 based on the external object 260 included in the image and/or the video obtained using the camera 240. For example, the wearable device 101 may receive the input based on the location of the external object 260 and/or the number of external objects 260 identified based on the image and/or the video. For example, the wearable device 101 may receive the input based on the shape and/or the direction 510 of the external object 260 identified based on the image and/or the video. For example, the wearable device 101 may select at least one external electronic device to which the audio signal obtained by the wearable device 101 is to be transmitted, by using the input that includes a conventional gesture associated with a whisper.

Hereinafter, an example of an operation in which a wearable device 101 selects at least one external electronic device based on the input will be described with reference to FIGS. 6A to 6B.

FIGS. 6A to 6B illustrate an example of an operation in which a wearable device selects at least one of a plurality of external electronic devices based on at least one of a location and a direction 510 of an external object 260. The wearable device of FIGS. 6A to 6B may be an example of the wearable device 101 of FIGS. 2 to 5.

Referring to FIG. 6A, an exemplary state 610 in which the wearable device displays visual objects 282, 284, and 286 in a FoV 270 using a display (e.g., the display 230 of FIG. 2) according to an embodiment is illustrated. The wearable device may identify at least one external electronic device by using communication circuitry (e.g., the communication circuitry 250 of FIG. 2). The at least one external electronic device may be connected to the wearable device to share an audio signal including a remark of a user, such as a video conference. The visual objects 282, 284, and 286 of FIG. 6A may correspond to each of the plurality of external electronic devices identified by the wearable device. The visual objects 282, 284, and 286 may be viewed to the user through a display area of the display of the wearable device that at least partially overlaps the FoV 270.

According to an embodiment, the wearable device may obtain an image associated with the FoV 270 by using a camera (e.g., the camera 240 of FIG. 2). The wearable device may identify the location, a posture, and/or the direction 510 of the external object 260 in the image based on the above-described operation with reference to FIG. 5. For example, the external object 260 may enter the FoV 270 based on an intention of the user to selectively transmit the audio signal to at least one of the plurality external electronic devices connected to the wearable device. A state 610 of FIG. 6A may include a state in which the wearable device identifies the external object 260 entered into the FoV 270 based on the intention. In the state 610 of FIG. 6A in which the external object 260 is included in the FoV 270, the external object 260 may be viewed to the user through the FoV 270. According to an embodiment, the wearable device may display a visual object corresponding to the external object 260 by overlapping on the external object 260 by using the display. The visual object may have a translucent polygon and/or closed curve overlapping on the external object 260.

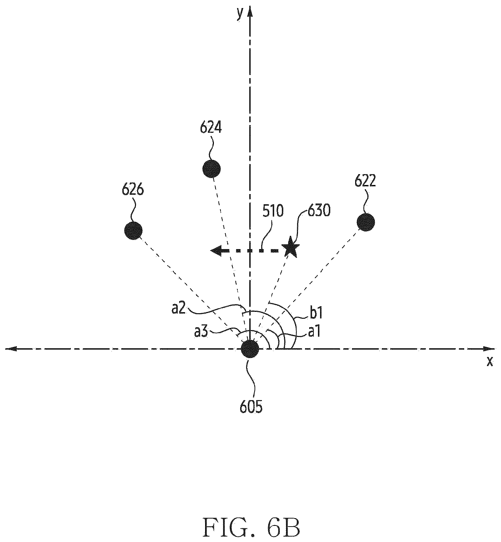

According to an embodiment, the wearable device may identify an input associated with transmission of the audio signal based on the location and/or the direction 510 of the external object 260 in the FoV 270. In an embodiment, the input may be identified after another input indicating entering a mode for selecting a target to transmit the audio signal, among external electronic devices corresponding to the visual objects 282, 284, and 286, such as a target selection mode. The input may indicate selection of at least one of the visual objects 282, 284, and 286. The wearable device may assign a coordinate in a virtual space to the object to compare a virtual object (e.g., the visual objects 282, 284, and 286) and a real object (e.g., the external object 260 and/or another visual object indicating the external object 260) shown in the FoV 270. Referring to FIG. 6B, in the state 610 of FIG. 6A, a virtual space obtained by the wearable device based on the external object 260 and the visual objects 282, 284, and 286 is exemplarily illustrated.

Referring to FIG. 6B, the wearable device according to an embodiment may identify a point 605, which is an origin of the virtual space, as a location in the virtual space of the wearable device. The virtual space may be formed in a memory (e.g., the memory 130 of FIG. 2) of the wearable device, in order to change a display of the virtual object (e.g., the visual objects 282, 284, and 286) that the wearable device displays through the display. The virtual space may be formed in a memory of the wearable device, in order to perform an interaction between the virtual object displayed by the wearable device through the display and an external object adjacent to the wearable device.

Referring to FIG. 6B, each of points 622, 624, and 626 in the virtual space may correspond to each of the visual objects 282, 284, and 286 displayed in the FoV 270 of FIG. 6A. According to an embodiment, the wearable device may display the visual objects 282, 284, and 286 in the FoV 270 based on the points 622, 624, and 626 in the virtual space. For example, in case that the wearable device identifies an external electronic device through the communication circuitry, the wearable device may select a point different from the point 605 corresponding to the origin in the virtual space as the point where the visual object corresponding to the external electronic device is displayed. Based on the selected point, the wearable device may add the visual object 280 into the FoV 270. For example, a location of the visual object 280 in the virtual space may be associated with the location and/or a size of the visual object 280 in the FoV 270.

According to an embodiment, the wearable device may determine a location of the external object 260 in the virtual space based on identifying the external object 260. Referring to FIG. 6B, an exemplary state in which the wearable device according to an embodiment determines a point 630 in the virtual space as the location of the external object 260 based on the external object 260 shown through the FoV 270 of FIG. 6A is illustrated. A distance between the point 630 corresponding to the external object 260 and the point 605 corresponding to the wearable device may be associated with a distance between the wearable device and the external object 260 identified by the wearable device using a camera and/or a sensor (e.g., a ToF sensor and/or a depth sensor). An angle b1 between a line connecting the point 630 corresponding to the external object 260 and the point 605 corresponding to the wearable device, and an x-axis may correspond to an azimuth angle of the external object 260 in the FoV 270.

As in the state 610 of FIG. 6A, in an exemplary state in which the external object 260 including a hand is shown through the visual objects 282 and 284 in the FoV 270 and the direction 510 of a palm included in the hand faces the visual objects 284 and 286 among the visual objects 282, 284, and 286, the wearable device may identify an input indicating selection of the at least one of the visual objects 282, 284, and 286, based on based on the location and the direction 510 of the external object 260. As in the state 610 of FIG. 6A, the external object 260 including a hand is shown through the visual objects 282 and 284 in the FoV 270, and in an exemplary state in which the direction 510 of a palm included in the hand faces the visual objects 284 and 286 among the visual objects 282, 284, and 286, the wearable device may identify an input indicating selection of the at least one of the visual objects 282, 284, and 286 the based on the location and the direction 510 of the external object 260.

Referring to FIG. 6B, the wearable device may form an area extending along the direction 510 from the point 630 in a virtual space corresponding to the external object 260. For example, the area may include a portion of the virtual space that exceeds the angle b1 of the point 630 corresponding to the external object 260. According to an embodiment, the wearable device may identify the input indicating selection of the at least one of the visual objects 282, 284, and 286, based on whether each of the visual objects 282, 284, and 286 is included in the area. For example, the wearable device may identify the input based on whether each of the visual objects 282, 284, and 286 is included in the area formed by the point 630 corresponding to the external object 260 and the direction 510. The area may have the point 630 of the external object 260 in the virtual space as a boundary. The area may be formed to extend along the direction 510 from the boundary in the virtual space.

Referring to FIG. 6B, an angle a1 of the point 622 corresponding to the visual object 282 may be less than the angle b1 of the point 630 corresponding to the external object 260. Angles a2 and a3 of the points 624 and 626 corresponding to the visual objects 284 and 286 may exceed the angle b1 of the point 630 corresponding to the external object 260. Since the area includes a portion of the virtual space that exceeds the angle b1 of the point 630 along the direction 510, the wearable device may determine that the visual objects 284 and 286 corresponding to the points 624 and 626 are selected by the input associated with the external object 260.

In a state of identifying the input indicating selection of the at least one of the visual objects 282, 284, and 286, based on the external object 260, the wearable device may emphasize the visual objects 284 and 286. For example, the wearable device may display a state of the visual objects 284 and 286 in a state different from a state of the visual object 282, by adjusting at least one of a color, brightness, or saturation of the visual objects 284 and 286. For example, the wearable device may display a preset image and/or an icon indicating that each of the visual objects 284 and 286 is selected by the input in a portion of the FoV 270 adjacent to the visual objects 284 and 286. For example, the wearable device may indicate that the visual objects 284 and 286 are selected based on closed curves surrounding each of the visual objects 284 and 286.

In an embodiment, in the state of identifying an input indicating selection of the visual objects 284 and 286 based on the external object 260, the wearable device may exclusively transmit an audio signal to external electronic devices corresponding to the visual objects 284 and 286. The audio signal may be received through a microphone (e.g., the microphone 220 of FIG. 2) of the wearable device. For example, in a state in which a session for communicating with three external electronic devices corresponding to the visual objects 282, 284, and 286 is established, the wearable device may transmit the audio signal and information for selective reproduction of the audio signal to the external electronic devices corresponding to the visual objects 284 and 286 through the session. For example, the wearable device may transmit the audio signal and the information to the external electronic devices corresponding to the visual objects 284 and 286. In the example, the wearable device may refrain from transmitting the audio signal and the information to an external electronic device corresponding to the visual object 282. The information for the selective reproduction of the audio signal may include data indicating that the external electronic devices corresponding to the visual objects 284 and 286 are selected by the input. The information may indicate that the audio signal is reproduced in at least one external electronic device (In the example, the external electronic devices corresponding to the visual objects 284 and 286) selected by the input.

In an embodiment, in the state of identifying the input indicating selection of the visual objects 284 and 286 based on the external object 260, the wearable device may transmit the audio signal to all of a plurality of external electronic devices respectively corresponding to the visual objects 282, 284, and 286 based on the session. The wearable device may transmit, together with the audio signal, information indicating that reproduction of the audio signal is restricted by an external electronic device corresponding to the visual objects 282 different from the visual objects 284 and 286 selected by the input. Based on the information, the external electronic device corresponding to the visual object 282 may refrain from reproducing the audio signal. The information may include a parameter (e.g., a flag) for indicating cessation of reproducing of an audio signal by an external electronic device different from an external electronic device selected by the input. In an embodiment, the information transmitted by the wearable device together with the audio signal may be referred to as metadata.

The wearable device according to an embodiment may record a parameter associated with an audio signal in metadata transmitted together with the audio signal received through the microphone. The wearable device may add a parameter indicating that selective reproduction of an audio signal is performed in the metadata. The parameter may include at least one of a name assigned to an addressee of the audio signal, an IP address for identifying an external electronic device corresponding to the addressee, and a MAC address. The metadata may include a parameter for indicating importance of the audio signal. The metadata may include at least one tag assigned to the audio signal. The metadata may include a parameter (e.g., at least one of an ID of a user logged into the wearable device, an IP address of the wearable device, or a MAC address) for identifying the wearable device that transmits the audio signal. The metadata may include a parameter indicating a sound effect (e.g., modulation such as a change in a tone and/or a pitch range) applied to the audio signal. The metadata may include a parameter (e.g., a timestamp) indicating a time point when the audio signal is received and/or a time point when the audio signal is transmitted from the wearable device. The metadata may include a parameter (e.g., a color of the visual object) for displaying the visual object associated with the audio signal. At least one parameter included in the metadata is not limited by the example.

In an embodiment, in the exemplary state 610 of FIG. 6A, which identifies the input indicating selection of the visual objects 284 and 286 based on the external object 260, transmitting information indicating that the wearable device selectively reproduces the audio signal based on the input may cease upon occurrence of at least one of different events. For example, the event may occur based on identifying a motion in which the external object 260 moves out of the FoV 270 using a camera. The event may be generated based on identifying that a preset period expires after receiving the input. The event may be generated based on receiving another input different from the input. The event may be generated based on another input indicating selection of a visual object (e.g., preset visual objects 284 and 286 indicating that the audio signal is selectively transmitted) displayed in the FoV 270 through the display.

As described above, the wearable device according to an embodiment may identify an input indicating selection of at least one external electronic device to which an audio signal is reproduced among the external electronic devices, at least based on a location (e.g., the points 622, 624, 626) of the external electronic devices mapped to the virtual space and a location (e.g., the point 630) of the external object 260 mapped to the virtual space and identified by the wearable device. The wearable device may identify the input based on a shape, the location, and/or the direction 510 of the external object 260. The wearable device may transmit an audio signal obtained by the wearable device and information associated with the input to the at least one external electronic device selected by the input. The information may include at least one parameter for selective reproduction and/or exclusive reproduction of an audio signal. Since the input is identified based on a conventional gesture associated with a whisper, the wearable device may simplify a gesture of a user. Since the input is identified based on the conventional gesture associated with the whisper, the wearable device may simplify a UI displayed to select the at least one external electronic device from among the plurality of external electronic devices. Since the UI is simplified, an amount of computation of a processor (e.g., the processor 120 of FIG. 2) of the wearable device may be reduced.

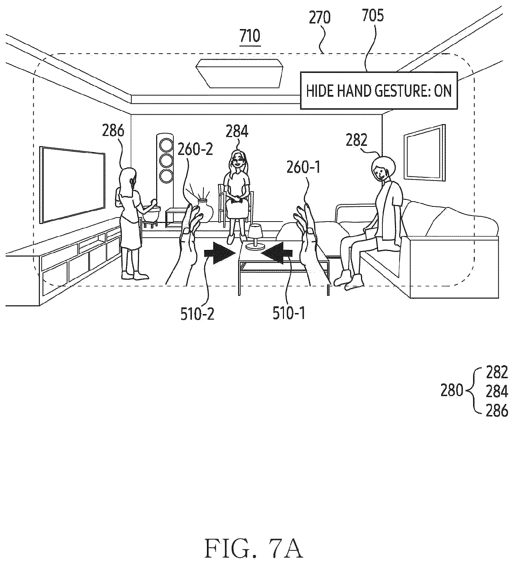

An example in which the wearable device identifies an input including a gesture based on a single hand is described, but an embodiment is not limited thereto. Hereinafter, referring to FIGS. 7A to 7B, an example of an operation in which the wearable device according to an embodiment identifies a gesture performed based on a plurality of hands and indicating selection of at least one external electronic device from among a plurality of external electronic devices will be described.

FIGS. 7A to 7B illustrate an example of an operation in which a wearable device selects at least one of a plurality of external electronic devices based on external objects 260-1 and 260-2, according to an embodiment. The wearable device of FIGS. 7A to 7B may be an example of the wearable device 101 of FIGS. 2 to 5.

Referring to FIG. 7A, an exemplary state 710 in which a wearable device according to an embodiment displays visual objects 282, 284, and 286 in a FoV 270 of a user using a display (e.g., the display 230 of FIG. 2) is illustrated. The wearable device may identify a plurality of external electronic devices respectively corresponding to the visual objects 282, 284, and 286 by using communication circuitry. The plurality of external electronic devices and the wearable device may be interconnected through a session established by a network service associated with a video conference. Each of the visual objects 282, 284, and 286 may be an avatar represented by account information logged into an external electronic device corresponding to a visual object. A motion of the avatar displayed by the wearable device may be associated with a gesture performed by a user of an external electronic device corresponding to the avatar. Similar to the visual objects 282, 284, and 286, the avatar represented by account information logged into the wearable device may be displayed in a display of the external electronic devices respectively corresponding to the visual objects 282, 284, and 286.

According to an embodiment, the wearable device may identify at least one external object (e.g., the external objects 260-1 and 260-2) including a body part of a user wearing the wearable device by using a camera (e.g., the camera 240 of FIG. 2) and/or a sensor. Based on identifying the at least one external object, the wearable device may obtain information for changing a display of the visual object (e.g., the avatar) corresponding to the wearable device based on a location, a shape, and/or a posture of the at least one external object. The wearable device may transmit obtained information to a plurality of external electronic devices connected to the wearable device. Since the wearable device transmits the information to the plurality of external electronic devices, the visual object displayed in displays of the plurality of external electronic devices and corresponding to the wearable device may reproduce a gesture based on the at least one external object.

According to an embodiment, the wearable device may identify an input indicating cessation of controlling a visual object, which is reproduced by at least one external electronic device connected to the wearable device and is associated with the wearable device, based on a motion of the at least one external object identified by the wearable device. The input may be identified based on a gesture based on at least one of the external objects 260-1 and 260-2. Referring to FIG. 7A, the wearable device may display a visual object 705 for controlling whether to transmit information associated with the motion of the at least one external object identified by the wearable device to the external electronic device by overlapping in the FoV 270 using the display. The visual object 705 may include a preset text (e.g., a "hide hand motion") associated with cessation of the motion of the at least one external object from being displayed by the external electronic device. Based on the visual object 705, the wearable device may receive an input of toggling whether to transmit the motion of the at least one external object to the external electronic device.

In a state 710 of FIG. 7A, it is assumed that the wearable device has received an input indicating cessation of transmitting the motion of the at least one external object identified by the wearable device to the external electronic device based on the visual object 705. In case that the motion is not transmitted to the external electronic device based on the input, the wearable device may transmit, to the external electronic device, a signal and/or information for adjusting a posture of the visual object corresponding to the wearable device to a preset posture. The preset posture may include, for example, an action that is repeatedly performed. The preset posture may include a posture of an avatar similar to holding a chin. An operation in which the wearable device adjusts the posture of the visual object to a preset posture different from the motion is not limited to the example.

In the exemplary state 710 of FIG. 7A, according to an embodiment, the wearable device may identify the plurality of external objects 260-1 and 260-2 by using the camera. Based on identifying the plurality of external objects 260-1 and 260-2, the wearable device may identify an area formed by a first location and a first direction of a first external object 260-1, and a second location and a second direction of a second external object 260-2 among the plurality of external objects 260-1 and 260-2. Based on the area, the wearable device may identify an input indicating selection of at least one visual object among the visual objects 282, 284, and 286 displayed in the FoV 270.

Referring to FIG. 7A, the wearable device may identify each of the external objects 260-1 and 260-2 included in the FoV 270 based on the above-described operation with reference to FIG. 5. The external object 260-1 may include a right hand of the user. The external object 260-2 may include a left hand of the user. Based on identifying each of the external objects 260-1 and 260-2, the wearable device may display visual objects overlapping each of the external objects 260-1 and 260-2 in the FoV 270. Based on identifying each of the external objects 260-1 and 260-2, the wearable device may map a location of the external objects 260-1 and 260-2 into a virtual space. The virtual space may be a coordinate system in which locations of the visual objects 282, 284, and 286 displayed in the FoV 270 by the wearable device are mapped.

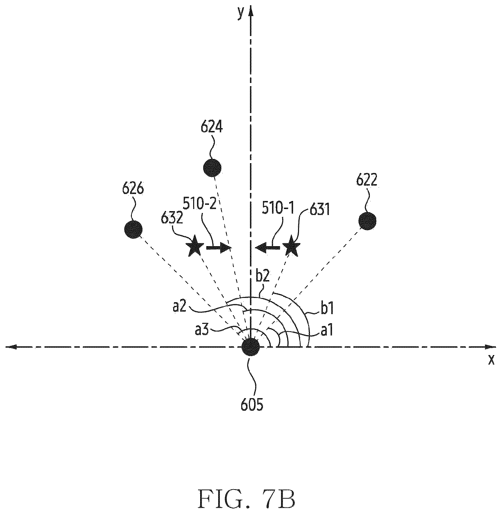

Referring to FIG. 7B, in the state 710 of FIG. 7A, the virtual space obtained by the wearable device based on visual objects 282, 284, and 286 and the external objects 260-1 and 260-2 is exemplarily illustrated. Referring to FIG. 7B, a point 605, which is an origin of the virtual space, may indicate a location of the wearable device. Each of points 622, 624, and 626 may indicate a location of each of the visual objects 282, 284, and 286 set in the virtual space for display of the visual objects 282, 284, and 286. Each of points 631 and 632 may indicate a location of each of the external objects 260-1 and 260-2 identified by the wearable device. The points 605, 622, 624, 626, 631, and 632 may be stored in a memory of the wearable device in a format of a coordinate based on a dimension (e.g., two dimensions, and/or three dimensions) of the virtual space in order for the wearable device to display at least one visual object in the FoV 270.

According to an embodiment, the wearable device may identify an input indicating selection of at least one of the visual objects 282, 284, and 286 based on a location (e.g., coordinates of the points 631 and 632) in a virtual space of each of the external objects 260-1 and 260-2 and/or directions 510-1 and 510-2 of each of the external objects 260-1 and 260-2. In the state 710 of FIG. 7A, the external object 260-1 including the right hand of the user is viewed through a space between the visual objects 282 and 284 in the FoV 270, and a direction 510-1 of a palm of the right hand may be disposed toward the visual objects 284 and 286. Referring to FIG. 7B, an angle b1 of the point 631 corresponding to the external object 260-1 in the virtual space may be included in a range formed by angles a1 and a2 of the points 622 and 624 respectively corresponding to visual objects 282 and 285. In the state 710 of FIG. 7A, the external object 260-2 including the left hand of the user is viewed through a space between the visual objects 284 and 286 in the FoV 270, and the direction 510-2 of a palm of the left hand may be disposed toward the visual objects 282 and 284. Referring to FIG. 7B, an angle b2 of the point 632 corresponding to the external object 260-2 in the virtual space may be included in a range formed by angles a2 and a3 of the points 624 and 626 respectively corresponding to the visual objects 284 and 286.

According to an embodiment, the wearable device may identify an input indicating selection of the at least one visual object among the visual objects 282, 284, and 286 based on at least one of the locations and/or the directions 510-1, 510-2 of the external objects 260-1 and 260-2. The input may be identified based on the points 631 and 632 of the external objects 260-1 and 260-2 and the points 622, 624, and 626 of the visual objects 282, 284, and 286 in the virtual space. Referring to FIG. 7B, the wearable device may have each of the points 631 and 632 of the external objects 260-1 and 260-2 as a boundary and may form an area extending along the directions 510-1 and 510-2. The area may include a portion of the virtual space that is greater than the angle b1 of the point 631 corresponding to the external object 260-1 and is less than the angle b2 of the point 632 corresponding to the external object 260-2. The wearable device may identify whether each of the points 622, 624, and 626 is included in the area. In an embodiment of FIG. 7B, since the point 624 is included in the area, the wearable device may determine that the visual object 284 corresponding to the point 624 and/or the external electronic device corresponding to the visual object 284 are selected by the input.

In a state of receiving an input indicating selection of the visual object 284 based on the external objects 260-1 and 260-2, the wearable device may emphasize the visual object 284 selected by the input. Emphasizing the visual object 284 by the wearable device may be performed similarly to the operation of emphasizing each of the visual objects 284 and 286 in the state 610 of FIG. 6A. In the state, the wearable device may transmit an audio signal obtained through a microphone (e.g., the microphone 220 of FIG. 2) to an external electronic device corresponding to the visual object 284. Together with the audio signal, the wearable device may transmit information associated with the input. For example, based on a media container in which the audio signal and metadata such as the information are matched, the wearable device may transmit the audio signal and the information. The media container may be a data structure for streaming the audio signal through a session and/or a communication link established between the wearable device and an external electronic device corresponding to the visual object 284.

As described above, the wearable device according to an embodiment may identify the locations and/or the directions 510-1 and 510-2 in the FoV 270 of the external objects 260-1 and 260-2 corresponding to both hands of the user. The wearable device may identify a gesture surrounding the visual object 284 by the both hands, as in the state 710 of FIG. 7A, based on the virtual space. Based on the gesture, the wearable device may transmit a signal for selective reproduction of the audio signal recorded by the wearable device to a specific external electronic device corresponding to the visual object 284, among the external electronic devices respectively corresponding to the visual objects 282, 284, and 286.

FIGS. 8A to 8B illustrate an example of an operation in which a wearable device selects at least one of a plurality of external electronic devices based on external objects 260-1 and 260-2, according to an embodiment. The wearable device of FIGS. 8A to 8B may be an example of a wearable device 101 of FIGS. 2 to 5.

Referring to FIG. 8A, an exemplary state 810 in which a wearable device displays visual objects 282, 284, and 286 in a FoV 270 using a display (e.g., the display 230 of FIG. 2) according to an embodiment is illustrated. The wearable device may display the visual objects 282, 284, and 286 representing each of the plurality of external electronic devices based on identifying the plurality of external electronic devices. In the state 810, the wearable device may identify at least one external object (e.g., the external objects 260-1 and 260-2). For example, the wearable device may identify the at least one external object using a camera (e.g., a camera 240 of FIG. 2) for capturing at least a portion of the FoV 270. In the state 810 of identifying the external objects 260-1 and 260-2 included in the FoV 270, the wearable device may display visual objects respectively corresponding to the external objects 260-1 and 260-2 together with the visual objects 282, 284, and 286 in the FoV 270.

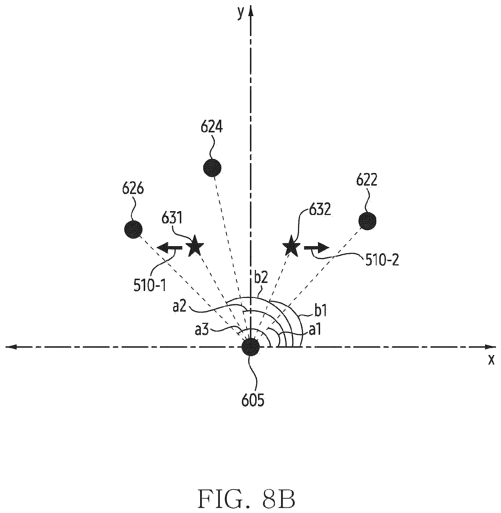

In an embodiment, in the state 810 of FIG. 8A identifying the external objects 260-1 and 260-2, the wearable device may obtain information indicating locations and/or directions 510-1 and 510-2 of the external objects 260-1 and 260-2. The information may indicate points 631 and 632 respectively corresponding to the external objects 260-1 and 260-2 in a virtual space. Referring to FIG. 8B, in the state 810 of FIG. 8A, a virtual space obtained by the wearable device based on the visual objects 282, 284, and 286 and the external objects 260-1 and 260-2 is exemplarily illustrated. The virtual space may have a point 605 indicating a location of the wearable device as an origin. Points 622, 624, and 626 may respectively be points for displaying the visual objects 282, 284, and 286 corresponding to the plurality of external electronic devices connected to the wearable device in the FoV 270. The points 631 and 632 may indicate the locations of the external objects 260-1 and 260-2 identified by the wearable device.

According to an embodiment, the wearable device may identify an input indicating selection of at least one of the visual objects 282, 284, and 286 based on the locations (e.g., locations indicated by the points 631 and 632), shapes, and/or the directions 510-1 and 510-2 of the external objects 260-1 and 260-2. In the state 810 of FIG. 8A, an external object 260-1 including a right hand of a user may be viewed through a space between visual objects 284 and 286 in the FoV 270, and the direction 510-1 of the external object 260-1 may be disposed toward a visual object 286. Referring to FIG. 8B, an angle b2 of a point 631 corresponding to the external object 260-1 may have a value between angles a2 and a3 of points 624 and 626 corresponding to the visual objects 284 and 286. In the state 810 of FIG. 8A, an external object 260-2 including a left hand of the user may be viewed through the visual objects 282 and 284 in the FoV 270, and the direction 510-2 of the external object 260-2 may be disposed toward a visual object 282. Referring to FIG. 8B, an angle b1 of the point 632 corresponding to the external object 260-2 may have a value between angles a1 and a2 between the points 622 and 624 corresponding to the visual objects 282 and 284. Referring to FIG. 8A, it is assumed that shapes of the external objects 260-1 and 260-2 have a preset shape in which a thumb is raised with respect to a palm.

According to an embodiment, the wearable device may identify an input indicating selection of at least one the visual object among the visual objects 282, 284, and 286 based on the locations and/or the directions of the external objects 260-1 and 260-2. The wearable device may identify the at least one visual object selected by the input based on a virtual space of FIG. 8B. Referring to FIG. 8B, the wearable device may determine, in the state 810 of FIG. 8A, that the visual object 286 corresponding to a point 626 included in an area extending along the direction 510-1 from the point 631 corresponding to the external object 260-1, and the visual object 282 corresponding to a point 622 included in an area extending along the direction 510-2 from the point 632 corresponding to the external object 260-2 are selected by the input. The wearable device may transmit an audio signal obtained through a microphone (e.g., the microphone 220 of FIG. 2) and information indicating a selective reproduction of the audio signal, to external electronic devices corresponding to visual objects 282 and 286 selected by the input.

According to an embodiment, the wearable device may identify a sound effect to be applied to the audio signal based on the shapes of the external objects 260-1 and 260-2. For example, based on identifying the external objects 260-1 and 260-2 having the preset shape in which the thumb is raised, the wearable device may determine that an input indicating that a sound effect such as an echo is applied to the audio signal is identified. Based on identifying the input, the wearable device may add at least one parameter indicating the sound effect to be applied to the audio signal in the information transmitted together with the audio signal.

As described above, according to an embodiment, the wearable device may identify another conventional gestures for shouting in addition to a conventional gesture for whispering. The wearable device may identify a target to which an audio signal is to be transmitted, among the plurality of external electronic devices, based on the other gesture. The wearable device may transmit information indicating the sound effect to be applied to the audio signal by the other gesture, together with the audio signal, to at least one external electronic device selected among the plurality of external electronic devices by the other gesture.

As described above with reference to FIG. 6A to FIG. 6B, FIG. 7A to FIG. 7B, and/or FIG. 8A to FIG. 8B, the wearable device according to an embodiment may identify an input indicating that the audio signal is selectively transmitted to the at least one of a plurality of external electronic devices based on a direction of a palm substantially parallel to a preset axis (e.g., a horizontal axis of the FoV 270). Hereinafter, an example of an operation in which a wearable device ceases transmitting the audio signal based on the direction of a palm will be described with reference to FIG. 9.

FIG. 9 illustrates an example of an operation of controlling a wearable device to transmit an audio signal to at least one external electronic device based on an external object 260, according to an embodiment. The wearable device of FIG. 9 may be an example of the wearable device 101 of FIGS. 2 to 5.

Referring to FIG. 9, the wearable device according to an embodiment may display visual objects 282, 284, and 286 respectively corresponding to a plurality of external electronic devices connected to the wearable device through communication circuitry (e.g., the communication circuitry 250 of FIG. 2). The wearable device may identify an external object 260 using a camera (e.g., the camera 240 of FIG. 2) and/or a sensor. Based on at least one of a distance between the external object 260 and the wearable device, a shape, a location, or a direction of the external object 260, the wearable device may identify an input indicating that the wearable device controls transmitting an audio signal to the plurality of external electronic devices. The audio signal may be obtained through a microphone (e.g., the microphone 220 of FIG. 2) of the wearable device.

In the state 910 of FIG. 9, the wearable device may identify the external object 260 included in FoV 270 and corresponding to a hand of a user. The wearable device may identify a direction of the palm of the hand. In the state 910 of FIG. 9, it is assumed that the palm of the hand faces the wearable device. The wearable device may identify the direction of the palm facing the wearable device based on an image including at least a portion of the FoV 270. In case that the direction of the external object 260 matches with a preset direction, such as the direction of the palm illustrated with reference to FIG. 9, or has a difference from the preset direction less than or equal to a preset threshold value, the wearable device may identify an input indicating cessation of transmitting the audio signal.

In an embodiment, in a state that identifying the input indicating cessation of transmitting the audio signal, the wearable device may at least temporarily cease transmitting the audio signal obtained through the microphone to external electronic devices corresponding to the visual objects 282, 284, and 286. The wearable device may resume transmitting the audio signal based on a change in a direction and/or movement of the external object 260. As described above, the wearable device according to an embodiment may cease transmitting the audio signal to the plurality of external electronic devices based on a conventional gesture for mute, such as a mouth covering gesture. As described above with reference to FIGS. 5 to 9, the wearable device according to an embodiment may identify various gestures for controlling transmission of the audio signal based on at least one hand. Based on the gesture, the wearable device may select at least one external electronic device to transmit the audio signal among the plurality of external electronic devices connected to the wearable device. Since the wearable device selects the at least one external electronic device based on the gesture, the wearable device may support selection of the at least one external electronic device based on an intuitive gesture.

An embodiment in which the wearable device identifies an input for selecting at least one external electronic device among a plurality of external electronic devices corresponding to the visual objects 282, 284, and 286 displayed through the FoV 270 based on a shape, a posture, and/or a direction of the hand of user is described, but an embodiment is not limited thereto. For example, the wearable device may identify the input for selecting the at least one of the external electronic devices among the plurality of external electronic devices based on a direction of a face of the user and/or a direction of a gaze identified based on a FT camera and/or an ET camera. For example, the wearable device may identify the input for selecting the at least one external electronic device among the plurality of external electronic devices based on a conventional gesture, such as a wink, to send a message to a preset user. For example, based on a location and/or a direction of a pointing device (e.g., a mouse and/or a remote controller held in a hand of a user) connected to the wearable device, the wearable device may identify the input for selecting the at least one external electronic device among the plurality of external electronic devices.

Hereinafter, an example of a UI provided by a wearable device to a user based on an audio signal received from an external electronic device will be described with reference to FIGS. 10A to 10B.

FIGS. 10A to 10B illustrate an example of an operation in which a wearable device outputs an audio signal received from at least one external electronic device according to an embodiment. The wearable device of FIGS. 10A to 10B may be an example of a wearable device 101 of FIGS. 2 to 5. It is assumed that the wearable device of FIGS. 10A to 10B is connected to external electronic devices corresponding to visual objects 282, 284, and 286 based on a network service associated with a video conference. For example, between the external electronic devices and the wearable device, a session for the video conference may be established. According to an embodiment, the wearable device may display the visual objects 282, 284, and 286 by overlapping in a FoV 270 using a display (e.g., the display 230 of FIG. 2).

The wearable device according to an embodiment may receive an audio signal from at least one of a plurality of external electronic devices connected to the wearable device based on a data structure such as a media container. The audio signal may be received together with information (e.g., metadata) associated with the audio signal. As described above with reference to FIGS. 5 to 9, the information may indicate exclusive reproduction of the audio signal. According to an embodiment, the wearable device may reproduce the audio signal received through a speaker (e.g., the speaker 210 of FIG. 2) of the wearable device based on receiving the audio signal.

According to an embodiment, the wearable device may display the visual object based on the information associated with the audio signal in the FoV 270 while reproducing the audio signal received from the external electronic device. Referring to an exemplary state 1010 of FIG. 10A, while receiving an audio signal from an external electronic device corresponding to a visual object 282, the wearable device may display a visual object 1030 indicating that the audio signal is transmitted from the external electronic device at substantially the same time as reproducing the audio signal. The wearable device may display the visual object 1030 by overlapping the visual object 282. The visual object 1030 may include a closed curve surrounding the visual object 282. The visual object 1030 may have an alpha value and/or transparency associated with translucency. A shape of the visual object 1030 may correspond to an outline of the visual object 282. The visual object 1030 may have a preset color indicating that an audio signal is reproduced by all electronic devices, except for a specific external electronic device (e.g., an external electronic device corresponding to the visual object 282) which obtained the audio signal, among electronic devices (e.g., the wearable device, and the external electronic devices corresponding to the visual objects 282, 284, and 286) connected through the session for the video conference. A size, a color, and/or saturation of the visual object 1030 may be adjusted based on the size of the audio signal corresponding to the visual object 1030.

According to an embodiment, the wearable device may receive information indicating selective reproduction of the audio signal together with the audio signal from the external electronic device. Based on the information, the wearable device may display a preset visual object indicating selective reproduction and/or exclusive reproduction of the audio signal. For example, the information may cause display of the preset visual object. The wearable device may reproduce the audio signal in a state 1010 in which the wearable device receives information indicating selective reproduction of the audio signal from the external electronic device corresponding to the visual object 286. Together with reproducing the audio signal, the wearable device may display a visual object 1020 for indicating selective reproduction of the audio signal by overlapping the external electronic device corresponding to the visual object 286 in the FoV 270. The visual object 1020 may have a shape surrounding the visual object 286. A color of the visual object 1020 may be different from a color of the visual object 1030, and may correspond to a preset color for notifying selective reproduction of the audio signal. The colors of the visual objects 1020 and 1030 may be classified by the external electronic devices respectively corresponding to the visual objects 1020 and 1030 and/or account information. Similarly, the wearable device may transmit information indicating that the visual object corresponding to the wearable device is displayed in a preset color associated with selective reproduction of the audio signal to the at least one external electronic device.

Referring to FIG. 10A, the wearable device may display a visual object 1040 that is a panel indicating a state of each of the plurality of external electronic devices connected to the wearable device in the FoV 270 by using the display. In the visual object 1040, the wearable device may display texts assigned to each of the plurality of external electronic devices. For example, an "A user" in the visual object 1040 may be a name uniquely assigned to the external electronic device corresponding to the visual object 282. For example, a "B user" in the visual object 1040 may be indicated by account information logged into an external electronic device corresponding to the visual object 284. For example, a "C user" in the visual object 1040 may be indicated by a name assigned to the external electronic device corresponding to the visual object 286.

In the visual object 1040, the wearable device may include an image and/or an icon indicating whether the audio signal is received from each of the plurality of external electronic devices. For example, in case that receiving the audio signal from the external electronic device corresponding to the visual object 282, the wearable device may indicate receiving the audio signal, by using an icon related to a text "A user" assigned to the external electronic device corresponding to the visual object 282 in the visual object 1040. For example, in case that the audio signal is not received from the external electronic device corresponding to the visual object 284, the wearable device may notify that the audio signal is not received based on an icon related to a text "B user" associated with the external electronic device corresponding to the visual object 284 in the visual object 1040. For example, in case that an audio signal matched to an input for exclusive reproduction of the audio signal is received from the external electronic device corresponding to the visual object 286, such as the external object 260 of FIG. 6A, the wearable device may notify the exclusive reproduction of the audio signal using an icon related to a text ("C user") associated with the external electronic device corresponding to the external object 286 in the visual object 1040.

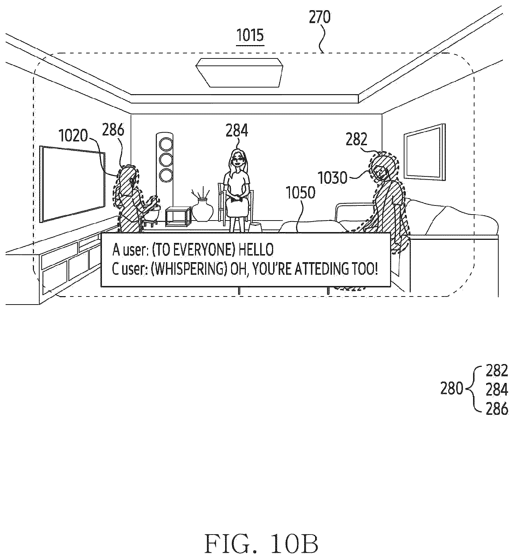

According to an embodiment, the wearable device may display a text obtained from the audio signal by overlapping in the FoV 270 based on a speech-to-text (STT), such as in a state 1015 of FIG. 10B. The wearable device may display the text in a visual object 1050. The visual object 1050 may be displayed together with at least one of the visual objects 1020, 1030, and 1040 of FIG. 10A. The wearable device may display, in the visual object 1050, a text corresponding to an audio signal corresponding to a specific external electronic device, based on a color uniquely assigned to the specific external electronic device. The wearable device may display, in the visual object 1050, a preset text (e.g., "whisper") for notifying that an audio signal reproduced by the wearable device is received together with information indicating exclusive reproduction of the audio signal.

As described above, the wearable device according to an embodiment may display a UI based on information received together with the audio signal in a state of reproducing the audio signal received from the external electronic device. In case that the audio signal is transmitted based on an input indicating a selection of a specific electronic device including the wearable device, described above with reference to FIGS. 5 to 9, in the UI, the wearable device may display at least one visual object associated with the input. The wearable device may notify a user that the audio signal is selectively reproduced by the wearable device among the wearable device and the plurality of external electronic devices connected to the wearable device based on the at least one visual object.

Hereinafter, an operation of a wearable device according to an embodiment will be described with reference to FIGS. 11 to 13.

FIG. 11 illustrates an example of a flowchart of an operation of a wearable device according to an embodiment. The wearable device of FIG. 11 may be an example of a wearable device 101 of FIGS. 2 to 5. At least one of operations of FIG. 11 may be performed by the wearable device 101 of FIG. 2 and/or the processor 120 of FIG. 2.

Referring to FIG. 11, in an operation 1110, the wearable device according to an embodiment may identify at least one external electronic device. The wearable device may identify the at least one external electronic device by using communication circuitry (e.g., the communication circuitry 250 of FIG. 2). The wearable device may display at least one visual object representing the at least one external electronic device in a display (e.g., the display 230 of FIG. 2) having a display area at least partially overlapping a FoV of a user (e.g., the FoV 270 of FIG. 2) in a state of identifying the at least one external electronic device.

Referring to FIG. 11, in an operation 1120, the wearable device according to an embodiment may identify an input indicating selection of the at least one external electronic device based on at least one of a direction or a location of an external object. The external object may include a hand of the user, such as the external objects 260, 260-1, and 260-2 of FIGS. 5 to 9. The wearable device may identify the input, by using a neural network trained to identify the external object including a preset body part of the user. The wearable device may identify the at least one external electronic device selected by the input based on an area formed by the input in a virtual space. For example, the wearable device may have a boundary including a location of the external object in FoV and may identify the input based on an area formed based on a direction of the external object (e.g., the direction 510 of FIG. 5). For example, based on whether the at least one visual object corresponding to the at least one external electronic device in the operation 1110 is included in an area extending along the direction of the external object from the location of the external object, the wearable device may identify the at least one external electronic device selected by the input.

Referring to FIG. 11, in an operation 1130, the wearable device according to an embodiment may transmit information associated with an input and an audio signal to at least one external electronic device. The wearable device may transmit the information indicating that the audio signal is obtained based on the input to the at least one external electronic device selected by the input. The wearable device may transmit the information to the at least one external electronic device, causing a display of a preset visual object indicating exclusive reproduction of the audio signal. The wearable device may refrain from transmitting the audio signal to another external electronic device different from the at least one external electronic device among the plurality of external electronic devices in a state that the plurality of external electronic devices including the at least one external electronic device are connected through the communication circuitry.

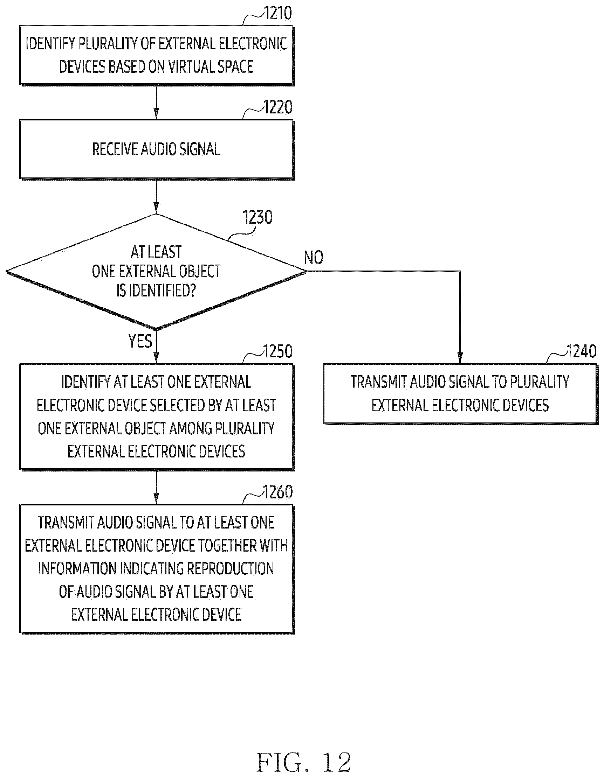

FIG. 12 illustrates an example of a flowchart of an operation of a wearable device according to an embodiment. A wearable device of FIG. 12 may be an example of the wearable device 101 of FIGS. 2 to 5. At least one of operations of FIG. 12 may be performed by the wearable device 101 of FIG. 2 and/or the processor 120 of FIG. 2. The at least one of the operations of FIG. 12 may be associated with the at least one of operations of FIG. 11.

Referring to FIG. 12, in an operation 1210, the wearable device according to an embodiment may identify a plurality of external electronic devices based on a virtual space. The operation 1210 of FIG. 12 may be associated with the operation 1110 of FIG. 11. The wearable device may identify locations of the plurality of visual objects in the virtual space to display the plurality of visual objects corresponding to each of the plurality of external electronic devices.

Referring to FIG. 12, in an operation 1220, the wearable device according to an embodiment may receive an audio signal. The wearable device may receive the audio signal by using a microphone (e.g., the microphone 220 of FIG. 2).

Referring to FIG. 12, in an operation 1230, the wearable device according to an embodiment may determine whether at least one external object is identified. In an operation 1240, in a state in which the at least one external object is not identified (1230-no), the wearable device according to an embodiment may transmit an audio signal of the operation 1220 to a plurality of external electronic devices. For example, the wearable device may transmit the audio signal to all of the plurality of external electronic devices identified based on the operation 1210. Transmitting the audio signal by the wearable device may include operation of transmitting metadata for the audio signal.

In case that the at least one external object is identified (1230-yes), in the operation 1250, the wearable device according to an embodiment may identify at least one external electronic device selected by the at least one external object among the plurality of external electronic devices. The wearable device may perform the operation 1250 similar to the operation 1120 of FIG. 11 to identify the at least one external electronic device selected by the at least one external object. For example, the wearable device may select at least one external electronic device among the plurality of external electronic devices based on a location and/or a direction of the at least one external object.

Referring to FIG. 12, in an operation 1260, the wearable device according to an embodiment may transmit the audio signal to the at least one external electronic device together with information indicating reproduction of the audio signal by the at least one external electronic device. For example, the wearable device may transmit the audio signal of the operation 1220 to the at least one external electronic device identified based on the operation 1250. The wearable device may transmit, together with the audio signal, information indicating that the audio signal is transmitted to the at least one external electronic device selected by the at least one external object identified based on the operation 1230, to the at least one external electronic device.

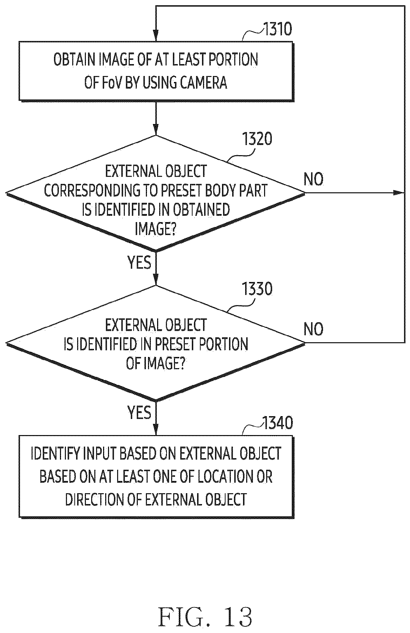

FIG. 13 illustrates an example of a flowchart of an operation of a wearable device according to an embodiment. The wearable device of FIG. 13 may be an example of the wearable device 101 of FIGS. 2 to 5. At least one of operations of FIG. 13 may be performed by the wearable device 101 of FIG. 2 and/or the processor 120 of FIG. 2. The at least one of the operations of FIG. 13 may be associated with at least one of the operation 1120 of FIG. 11 and/or the operations 1230 and 1250 of FIG. 12.

Referring to FIG. 13, in an operation 1310, the wearable device according to an embodiment may obtain an image of at least a portion of a FoV by using a camera (e.g., the camera 240 of FIG. 2).

Referring to FIG. 13, in an operation 1320, the wearable device according to an embodiment may determine whether an external object corresponding to a preset body part is identified in the obtained image. The preset body part may include a hand of a user. The wearable device may identify the external object using a neural network trained to identify a location and/or a direction of the hand of the user.

In case that the external object is identified in an image (1320-Yes), in an operation 1330, the wearable device according to an embodiment may determine whether the external object is identified in a preset portion of the image. The preset portion may be a portion divided by a distance between the wearable device and the external object. Referring to FIG. 13, in case that the external object is not identified in the image (1320-No), or the external object is identified in another portion different from the preset portion (1330-No), the wearable device may maintain obtaining the image based on the operation 1310. An order in which the operations 1320 and 1330 are performed is not limited to an embodiment of FIG. 13. For example, the wearable device may perform the operations 1320 and 1330 substantially simultaneously, or may perform the operations 1320 and 1330 in a different order from the order of FIG. 13.

In case that the external object is identified in a preset portion (1330-yes), in an operation 1340, according to an embodiment, the wearable device may identify an input based on the external object based on at least one of a location or a direction of the external object. The input may include an input indicating selection of at least one external electronic device among the plurality of external electronic devices described with reference to FIG. 5, FIG. 6A to FIG. 6B, FIG. 7A to FIG. 7B, and/or FIG. 8A to FIG. 8B.

As described above, the wearable device according to an embodiment may identify a conventional gesture for a whisper. Based on identifying the gesture, the wearable device may selectively transmit an audio signal to at least one external electronic device specified by the gesture among a plurality of external electronic devices connected to the wearable device. The wearable device may transmit metadata indicating a selective reproduction of the audio signal together with the audio signal.

An effect derived from embodiments disclosed in this document is not limited to the above-described effects, and may be variously extended without departing from spirit and scope disclosed in this document.

A method of selectively transmitting an audio signal obtained from a user wearing a wearable device to one or more external electronic devices based on a gesture of the user may be required, by using the wearable device.

As described above, a wearable device (e.g., the wearable device 101 of FIG. 2) according to an embodiment may comprise a display (e.g., the display 230 of FIG. 2), communication circuitry (e.g., the communication circuitry 250 of FIG. 2), a microphone (e.g., the microphone 220 of FIG. 2), a camera (e.g., the camera 240 of FIG. 2), and a processor (e.g., the processor 120 of FIG. 2). The processor may be configured to display, in the display, visual objects (e.g., the visual objects 282, 284, and 286 of FIG. 2) respectively corresponding to a plurality of external electronic devices which are identified by using the communication circuitry. The processor may be configured to identify, in a state that the visual objects are displayed, at least one external object (e.g., the external object 260 of FIG. 2) including at least one hand by using the camera. The processor may be configured to identify, based on a direction (e.g., the direction 510 of FIG. 5) of a surface of the at least one hand, an input indicating selection of at least one visual object among the visual objects displayed in the display. The processor may be configured to transmit, based on identification of the input, information associated with the input, and an audio signal received through the microphone, to at least one external electronic device corresponding to the at least one visual object selected by the input. According to an embodiment, the wearable device may selectively transmit the audio signal obtained from a user wearing the wearable device to one or more external electronic devices based on a gesture of the user.

For example, the processor may be configured to transmit, to the at least one external electronic device, the information indicating that the audio signal is reproduced at the at least one external electronic device among the plurality of external electronic devices based on the input.

For example, the processor may be configured to transmit, to another external electronic device different from the at least one external electronic device among the plurality of external electronic devices, the information indicating cessation of reproducing of the audio signal by the another external electronic device.

For example, the processor may be configured to transmit, to the at least one external electronic device, the information indicating to display a visual object corresponding to the wearable device with a preset color associated with the input.

For example, the processor may be configured to transmit, based on a media container in which the audio signal received within a time section with a preset period and metadata including the information are matched, the information and the audio signal.

For example, the processor may be configured to identify, using a neural network trained to identify the at least one hand which is a preset body part from an image obtained by the camera, the input.

For example, the processor may be configured to identify, based on identifying a plurality of hands using the camera, the input indicating selection of the at least one visual object based on an area formed by a first location and a first direction (e.g., the first external object 510-1 of FIG. 7A and/or FIG. 8A) of a first hand among the plurality of hands, and a second location and a second direction (e.g., the first external object 510-2 of FIG. 7A and/or FIG. 8A) of a second hand different from the first hand.

For example, the processor may be configured to identify the input indicating selection of the at least one visual object, based on whether each of the visual objects is included in an area formed by a location and the direction of the at least one hand within the display.

As described above, a method of the wearable device according to an embodiment may comprise identifying (e.g., the operation 1110 of FIG. 11) at least one external electronic device that is connected through communication circuitry in the wearable device. The method may comprise identifying (e.g., the operation 1120 of FIG. 11), based on a direction of a surface of a hand in a field-of-view (FoV) of a user wearing the wearable device, an input indicating selection of the at least one external electronic device. The method may comprise transmitting (e.g., the operation 1130 of FIG. 11), based on identification of the input, information associated with the input, and an audio signal received through a microphone in the wearable device, to the at least one external electronic device through the communication circuitry.

For example, the identifying the input may comprise identifying the input based on an area formed based on a direction of the surface of the hand, the area has a boundary including a location of the hand within the FoV.

For example, the identifying the input may comprise identifying the input using a neural network trained to identify the hand which is a preset body part of the user.

For example, the transmitting may comprise refraining from, in a state that a plurality of external electronic devices including the at least one external electronic device are connected through the communication circuitry, transmitting the audio signal to another external electronic device different from the at least one external electronic device among the plurality of external electronic devices.

For example, the transmitting may comprise transmitting, to the at least one external electronic device, the information causing displaying a preset visual object indicating exclusive reproducing of the audio signal.

For example, the method may comprise displaying, in a state identifying the at least one external electronic device, at least one visual object representing the at least one external electronic device in a display in the wearable device having a display area at least partially overlapped to the FoV.

For example, the identifying the input may comprise identifying, based on whether the at least one visual object is included in an area extended along the direction of a surface of the hand from a location of the hand, the input.

As described above, a method of a wearable device according to an embodiment may comprise displaying, in the display in the wearable device, visual objects respectively corresponding to a plurality of external electronic devices identified using communication circuitry in the wearable device. The method may comprise identifying, in a state that the visual objects are displayed, at least one external object including at least one hand using a camera in the wearable device. The method may comprise identifying, based on a direction of a surface of the at least one hand, an input indicating selection of at least one visual object among the visual objects displayed in the display. The method may comprise transmitting, based on identification of the input, information associated with the input, and an audio signal received through a microphone in the wearable device, to at least one external electronic device corresponding to the at least one visual object selected by the input.

For example, the transmitting may comprise transmitting, to the at least one external electronic device, the information indicating that the audio signal is reproduced at the at least one external electronic device among the plurality of external electronic devices based on the input.

For example, the transmitting may comprise transmitting, to another external electronic device different from the at least one external electronic device among the plurality of external electronic devices, the information indicating cessation of reproducing of the audio signal by the another external electronic device.

For example, the transmitting may comprise transmitting, based on a media container in which the audio signal received within a time section with a preset period and metadata including the information are matched, the information and the audio signal.

For example, the identifying the input may comprise identifying, using a neural network trained to identify the at least one hand which is a preset body part from an image obtained by the camera, the input.

For example, the identifying the input may comprise identifying the input indicating selection of the at least one visual object based on whether each of the visual objects is included in an area formed by a location of the at least one hand and a direction of the at least one hand in the display.

As described above, a wearable device (e.g., the wearable device 101 of FIG. 2) according to an embodiment may comprise communication circuitry (e.g., the communication circuitry 250 of FIG. 2), a microphone (e.g., the microphone 220 of FIG. 2), and a processor (e.g., the processor 120 of FIG. 2). The processor may be configured to identify at least one external electronic device that is connected through the communication circuitry and the wearable device. The processor may be configured to identify, based on a direction (e.g., the direction 510 of FIG. 5) of a surface of a hand in a FoV (e.g., the FoV 270 of FIG. 2) of a user wearing the wearable device, an input indicating selection of the at least one external electronic device. The processor may be configured to transmit, based on identification of the input, information associated with the input, and an audio signal received through a microphone in the wearable device, to the at least one external electronic device through the communication circuitry.

For example, the processor may be configured to identify the input based on an area formed based on a direction of the surface of the hand, the area has a boundary including a location of the hand within the FoV.

For example, the processor may be configured to identify the input using a neural network trained to identify the hand which is a preset body part of the user.

For example, the processor may be configured to refrain from, in a state that a plurality of external electronic devices including the at least one external electronic device are connected through the communication circuitry, transmitting the audio signal to another external electronic device different from the at least one external electronic device among the plurality of external electronic devices.

For example, the processor may be configured to transmit, to the at least one external electronic device, the information causing displaying a preset visual object indicating exclusive reproducing of the audio signal.

For example, the wearable device may comprise a display (e.g., the display 230 of FIG. 2) having a display area at least partially overlapped to the FoV. The processor may be configured to display at least one visual object representing the at least one external electronic device in the display in a state identifying the at least one external electronic device.

For example, the processor may be configured to identify, based on whether the at least one visual object is included in an area extended along the direction of a surface of the hand of external object from a location of the hand, the input.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device (101), comprising:
a display (230);
communication circuitry (250);
a microphone (220);
a camera (240); and
a processor (120), wherein the processor is configured to:
display, in the display, visual objects (282, 284, 286) respectively corresponding to a plurality of external electronic devices which are identified by using the communication circuitry;
identify, in a state that the visual objects are displayed, at least one external object (260) including at least one hand by using the camera;
identify, based on a direction (510) of a surface of the at least one hand, an input indicating selection of at least one visual object among the visual objects displayed in the display; and
transmit, based on identification of the input, information associated with the input, and an audio signal received through the microphone, to at least one external electronic device corresponding to the at least one visual object selected by the input.

2. The wearable device of claim 1, wherein the processor is configured to:
transmit, to the at least one external electronic device, the information indicating that the audio signal is reproduced at the at least one external electronic device among the plurality of external electronic devices based on the input.

3. The wearable device of any one of preceding claims, wherein the processor is configured to:
transmit, to another external electronic device different from the at least one external electronic device among the plurality of external electronic devices, the information indicating cessation of reproducing of the audio signal by the another external electronic device.

4. The wearable device of any one of preceding claims, wherein the processor is configured to:
transmit, to the at least one external electronic device, the information indicating to display a visual object corresponding to the wearable device with a preset color associated with the input.

5. The wearable device of any one of preceding claims, wherein the processor is configured to:
transmit, based on a media container in which the audio signal received within a time section with a preset period and metadata including the information are matched, the information and the audio signal.

6. The wearable device of any one of preceding claims, wherein the processor is configured to:
identify, using a neural network trained to identify the at least one hand which is a preset body part from an image obtained by the camera, the input.

7. The wearable device of any one of preceding claims, wherein the processor is configured to:
identify, based on identifying a plurality of hands using the camera, the input indicating selection of the at least one visual object based on an area formed by a first location and a first direction (510-1) of a first hand among the plurality of hands, and a second location and a second direction (510-2) of a second hand different from the first hand.

8. The wearable device of any one of preceding claims, wherein the processor is configured to:
identify the input indicating selection of the at least one visual object, based on whether each of the visual objects is included in an area formed by a location and the direction of the at least one hand within the display.

9. A method of wearable device, comprising:
identifying (1110) at least one external electronic device that is connected through communication circuitry in the wearable device;
identifying (1120), based on a direction of a surface of a hand in a field-of-view (FoV) of a user wearing the wearable device, an input indicating selection of the at least one external electronic device; and
transmitting (1130), based on identification of the input, information associated with the input, and an audio signal received through a microphone in the wearable device, to the at least one external electronic device through the communication circuitry.

10. The method of claim 9, wherein the identifying the input comprising:
identifying the input based on an area formed based on a direction of the surface of the hand, the area has a boundary including a location of the hand within the FoV.

11. The method of any one of preceding claims, wherein the identifying the input comprising:
identifying the input using a neural network trained to identify the hand which is a preset body part of the user.

12. The method of any one of preceding claims, wherein the transmitting comprising:
refraining from, in a state that a plurality of external electronic devices including the at least one external electronic device are connected through the communication circuitry, transmitting the audio signal to another external electronic device different from the at least one external electronic device among the plurality of external electronic devices.

13. The method of any one of preceding claims, wherein the transmitting comprising:
transmitting, to the at least one external electronic device, the information causing displaying a preset visual object indicating exclusive reproducing of the audio signal.

14. The method of any one of preceding claims, comprising:
displaying, in a state identifying the at least one external electronic device, at least one visual object representing the at least one external electronic device in a display in the wearable device having a display area at least partially overlapped to the FoV.

15. The method of any one of preceding claims, wherein the identifying the input comprising:
identifying, based on whether the at least one visual object is included in an area extended along the direction of a surface of the hand from a location of the hand, the input.
